# EUROPÄISCHE PATENTSCHRIFT

(11) **EP 2 893 187 B1**
(45) Veröffentlichungstag und Bekanntmachung des Hinweises auf die Patenterteilung: **04.11.2020**
(21) Anmeldenummer: 13753898.9
(22) Anmeldetag: 03.09.2013
(51) Int. Cl.: F03D 13/20

(54) **TURMBAUWERK EINER WINDENERGIEANLAGE UND VERFAHREN ZUM STABILISIEREN EINES TURMBAUWERKS EINER WINDENERGIEANLAGE**
TOWER CONSTRUCTION OF A WIND TURBINE AND METHOD FOR STABILIZING A TOWER CONSTRUCTION OF A WIND TURBINE
TOUR ÉOLIENNE ET PROCÉDÉ DE STABILISATION D'UNE TOUR ÉOLIENNE

(30) Priorität: 03.09.2012 DE 102012017302; 03.09.2012 DE 102012017301
(43) Veröffentlichungstag der Anmeldung: 15.07.2015
(73) Patentinhaber: X-Tower Constructions GmbH, 80469 München (DE)
(72) Erfinder: WAGNER, Philipp, 97638 Mellrichstadt (DE)
(74) Vertreter: Prinz & Partner mbB
(86) Internationale Anmeldenummer: PCT/EP2013/068207
(87) Internationale Veröffentlichungsnummer: WO 2014/033332

(56) Entgegenhaltungen:
- EP-A1- 2 339 094
- WO-A1-2007/025555
- WO-A1-2011/091799
- US-A- 4 266 911

## Beschreibung

Die Erfindung betrifft Bauweisen für Türme von Windenergieanlagen und ein Verfahren zum Stabilisieren eines Turmbauwerks einer Windenergieanlage.

Die Windenergieanlagen (WEA) mit Windgeneratoren, auf die sich die erfindungsgemäßen Bauweisen beziehen, haben einen Betonturm und auf der Turmspitze angebrachte, schwere, zum Teil weit ausladende Großkomponenten. Diese Großkomponenten sind, sofern vorhanden, Gondel, elektrischer Generator, Rotor mit wenigstens einem Rotorblatt und, sofern vorhanden, einem Getriebe für den Rotor, sowie im Falle von Hybridtürmen zusätzliche Stahlrohrsegmente, die auf den Betonturm aufgesetzt sind und den oder die Windgenerator(en) tragen.

Windenergieanlagen unterschiedlicher Größe, Leistung und unterschiedlichen Typs verbreiten sich mehr und mehr, um elektrische Energie aus der kinetischen Energie des Windes zu erzeugen. Die Effektivität einer solchen Windenergieanlage hängt unter anderem davon ab, dass der Wind möglichst lange und gleichmäßig über das Jahr verteilt vorhanden ist.

Es ist bekannt, dass Windenergieanlagen um so höhere Erträge aus dem über das Jahr verteilten Windangebot schöpfen können, je höher die Windenergieanlagen gebaut werden, da in größeren Höhen der Wind im Durchschnitt schneller und laminarer weht. Dies ist insbesondere für küstenferne Gebiete, hügelige oder gebirgige Gebiete der Fall.

In den vergangenen Jahren geht aufgrund von Wirtschaftlichkeitsüberlegungen der Trend zu immer größeren Anlageneinheiten, wobei hier vor allem der am weitesten verbreitete Typ von Windenergieanlagen, der des mehrblättrigen, horizontalachsigen Rotors auf einem Turm weiterhin das größte Marktpotential hat. Ein Problem dieses Windenergieanlagentyps besteht darin, dass das Upscaling der Großkomponenten des Windgenerators gleichzeitig einen immer höheren und stabileren Turm erforderlich macht. Auf diese Turmbauwerke und ihre Fundamente entfallen inzwischen 30 bis 45% der Gesamtbaukosten, was die Wirtschaftlichkeit der Turmkonstruktionen solcher Groß-Windenergieanlagen ("Multimegawatt-Anlagen") mit Nabenhöhen von 140 m Höhe und mehr zu einem entscheidenden Faktor werden läßt. Gleiches gilt für WEA mit vertikalachsigen Rotoren, deren Größe ebenfalls stetig zunimmt.

Grundsätzlich sind immer höhere und immer leistungsfähigere WEA sinnvoll, da selbst bei dem herkömmlichen Bauprinzip des freistehenden einseitig eingespannten vertikalen Kragarms der Materialverbrauch für das Turmbauwerk mit zunehmender Leistung nur in der zweiten Potenz anwächst, während der Energieertrag infolge der Leistungsgleichung des Windes den Ertrag in der dritten Potenz anwachsen läßt. Dieser Umstand hat in der Vergangenheit einen erheblichen Leistungszuwachs bei WEA zur Folge gehabt, der ungebrochen anhält.

Dieser Trend fand auch in der Entwicklung immer höherer und kräftigerer Türme seinen Niederschlag. Dieser stößt aber inzwischen insbesondere bei horizontalachsigen Rotoren an eine Grenze, bei der der Mehrertrag der Maschine infolge der stark ansteigenden Turm- und Fundamentbaukosten die Gesamtwirtschaftlichkeit der WEA empfindlich einschränkt. Insbesondere die Betreiber von Windkraftanlagen an Standorten mit geringerem Windangebot, beispielsweise an Binnenlandstandorten, die auf sehr hohe Nabenhöhen angewiesen sind, um Erträge wirtschaftlich zu generieren, sind auf sehr hohe und gleichzeitig sehr wirtschaftliche Turmbauwerke angewiesen.

In jüngster Vergangenheit wurden insbesondere bei horizontalachsigen WEA verschiedene Turmtypen erprobt und entwickelt, um die Nabenhöhe anzuheben und den Rotor in die windertragreicheren höheren Luftschichten zu bringen. Hierbei sind insbesondere der Betonturm, der Hybridturm, bestehend aus einem Betonschaft und einem aufgesetzten Stahlmast, auf dem der Windgenerator sitzt, sowie hohe Gittermastkonstruktionen zu nennen.

Jeder dieser Turmtypen hat seine eigenen Vorzüge und Nachteile, die je nach Anwendungsfall dem einen oder anderen Turmtyp den Vorzug geben.

Nachteilig bei allen am Markt angebotenen Bauweisen für leistungsstarke Windgeneratoren ist mit Ausnahme des Gittermasten der stark ansteigende Materialverbrauch aus statischen und dynamischen Gründen, der durch das Bauprinzip als solches hervorgerufen wird: Je höher die freistehenden Türme ausgebildet werden, desto mehr kommt der konstruktive Effekt zum Tragen, dass der Massenverbrauch mit zunehmender Höhe, wie oben genannt, exponentiell ansteigt. Dieser Effekt hat seinen Ursprung in einer Überlagerung aus dem Hebelgesetz der Statik einerseits, bei dem das Produkt aus Kraft und Hebelarm ein Moment im Bauteil hervorruft, die entsprechende Dimensionierungen erforderlich macht, und den Erfordernissen der Dynamik andererseits, bei der Bauteile infolge der Ermüdungsbeanspruchung über den Nutzungszeitraum mit entsprechenden Reserven im Bauteilquerschnitt ausgestattet sein müssen. Dieser Effekt macht sich bei Türmen von Windenergienanlagen insbesondere ab Höhen von etwa 120 Metern zunehmend bemerkbar.

Darüber hinaus treten ab etwa 140 Metern bei allen Turmbauweisen zusätzlich eigene material- und konstruktionsimmanente Probleme auf, die hier ebenfalls genannt werden sollen, um zu verdeutlichen, aus welcher Problematik heraus die Erfindung sich entwickelt:
Reine Stahlrohrtürme mit Vollwandquerschnitten sind bereits ab Höhen von 120 Metern durch ihre Weichheit besonders schwingungsanfällig. Es sind Tilger und Dämpfungselemente notwendig, um die Turmschwingungen zu reduzieren. Darüber hinaus sind beispielsweise bei 140 Metern Nabenhöhe bei reinen Stahlkonstruktionen bis zu zwei Drittel der notwendigen verbauten Stahlmengen zur Beantwortung der dynamischen Belastungen und der Ermüdungsproblematik durch zu vermeidende Schwingungserregung erforderlich. Durch die Weichheit können insbesondere bestimmte Rotordrehzahlen nicht genutzt werden, da sie den Turm zum Schwingen anregen würden. Der Rotor muß sich aufgrund dieser Tatsache bei bestimmten Windgeschwindigkeiten durch Stellglieder langsamer drehen, als der Wind es erlauben würde, was eine Leistungseinbuße außerhalb des Drehzahloptimums für das dargebotene Windprofil bedeutet.

Betontürme, sowie Hybridtürme, erfordern mit zunehmender Höhe infolge der notwendigen Turmschaftspreizung am unteren Ende des Turmes erhebliche Massen und es sind nennenswerte Vorspannkräfte notwendig, um den Turm, der einen Hebelarm darstellt, über die große Länge akzeptabel schlank auszubilden. Ortbetontürme und horizontalfugenverklebte oder unverklebte horizontaltrockenfugenaufweisende Fertigteiltürme arbeiten hier wahlweise mit teil- oder vollüberdrückenden Vorspannungen. Das bedeutet, dass die über die Zugglieder einzubringende Vorspannung so ausgelegt ist, dass sie den im Bauteil auftretenden Zugkräften infolge des Hebelarmes eine ausreichende Gegenkraft entgegensetzt, um den Betonschaft wahlweise dauerhaft überdrückt zu halten (vollüberdrückt), bzw. bei Ortbetontürmen nur im Extremlastfall ein Übergang vom Zustand I in den Zustand II des Betons zuläßt (teilüberdrückt). Hinzu kommen Verschiebungen der Eigenfrequenz des Turmes beim Übergang vom Zustand I in den Zustand II im Falle von Ortbetonkonstruktionen oder verklebten Fertigteilen.

Gittermasten umgehen zwar zunächst den mit zunehmender Höhe stark anschwellenden Massenzuwachs der bereits genannten Bauweisen durch eine Auflösung des Turmschaftes in Einzelstäbe. Die auftretenden Kräfte werden hier durch eine Gitterstruktur aus zusammengesetzten Stäben zwischen Gondel und Grundfläche übertragen, wobei Gittermasten aufgrund ihres Bauprinzips an ihrem unteren Ende jedoch eine besonders weite Spreizung aufweisen. Diese wird häufig als unschön empfunden, weswegen sich Gittermasten nie richtig durchsetzen konnten. Zudem werden sie vom Wartungspersonal der WEA über die Betriebsjahre nicht als die ideale Turmbauweise eingestuft, weil es keinen witterungsgeschützten Aufstieg zum Generator gibt. Hohe Gittermasttürme gelten zudem als anfällig in Bezug auf Torsion.

Nachteilig bei allen einseitig eingespannten Kragarmen sind infolge der Schwingungsanfälligkeit sämtliche Eigenfrequenzen des freistehenden Turmbauwerkes, die in Campbell-Diagrammen dokumentiert werden und die entweder im Betrieb der Anlage die beschriebenen Leistungseinbußen zur Folge haben, da bestimmte Drehzahlbereiche gemieden werden müssen, oder für den gewünschten Nennbetrieb eine modifizierte Turmgeometrie erzwingen, die in Bezug auf das Turmdesign nicht das wirtschaftliche Optimum darstellt. Die Türme werden heute mehrheitlich als sogenannte "hart/weiche" Konstruktionen ausgelegt, bei der der erlaubte Drehzahlbereich des Rotors oberhalb des Schnittpunktes aus der ersten Eigenfrequenz des Turmbauwerkes und der Anregung durch den in der Regel 3-blättrigen Rotor 3p in einem Campbell-Diagramm beginnt. Der Drehzahlbereich endet, bevor die Anregung p erreicht wird, die z. B. durch Unwuchten verursacht wird. Einer "hart/harten" Auslegung der Turmkonstruktion, bei der die untere Drehzahlgrenze entfällt, was für Schwachwindstandorte wünschenswert ist, steht ein sehr hoher Materialverbrauch zum Erlangen einer ausreichenden Steifigkeit für die Turmkonstruktion entgegen. Weich/weiche Konstruktionen werden von der Fachwelt als zu wenig determiniert abgelehnt.

Am Beginn der Entwicklung der kommerziellen Windkraftindustrie wurde zudem an dem etwa 100 Meter hohen Turm der Großwindanlage Growian und der kleineren Versuchsanlage Monopteros in Wilhelmshaven ein abgespanntes stählernes Turmrohr erprobt, dessen Ausbildung zwar eine gewisse Verbesserung des statischen Systems darstellte, das aber infolge zahlreicher technischer Probleme beider Anlagen nicht weiterverfolgt wurde. Die Abspannung wurde damals bis unter die Gondel geführt und die Rotorblätter mit einer entsprechenden Neigung nach vorne versehen, was in Bezug auf die Rotorblattgeometrie nach heutigen, möglichst wirtschaftlichen Bauprinzipien z. B. nicht mehr akzeptabel ist. Die Blattspitzen laufen heute im Extremlastfall sehr dicht am Turm entlang.

Heute werden abgespannte Turmrohre nur im Bereich von Kleinwindkraftanlagen und für Anlagen mittlerer Größe und niedriger Nabenhöhe von unter 100 Metern angeboten und eingesetzt. Sie bestehen in der Regel aus einem metallischen Rohr, das unterhalb des Rotors mit Seilen abgespannt wird. Der Zweck dieser Abspannungen beschränkt sich ausschließlich auf den Abtrag der horizontal am Turmschaft angreifenden Kräfte, insbesondere infolge des auftretenden und in den Baugrund abzuleitenden Rotorschubes. Diese Bauweise ist für diesen Anwendungsfall infolge des stark reduzierten Momenteintrags am Fußpunkt der Schaftkonstruktion und der darum nicht notwendigen Bauteilspreizung des Schaftrohres am Fuß des Turmes wirtschaftlich.

Da es sich bei der Eigenschaft des Abspannpunktes am Turmschaft jedoch um eine seitlich verschiebliche biegeweiche Drillfeder handelt, sind Turmschäfte aus Stahl ab einer Gesamthöhe insbesondere ab 150 Metern sehr torsionsweich, sofern sie wünschenswerter Weise infolge einer Abspannung ebenfalls sehr schlank ausgebildet werden. Die Nachteiligkeit der Torsionsweichheit kommt insbesondere in Kombination mit den inzwischen üblichen Blattlängen von mehr als 60 Metern für die aufgesetzten horizontalachsigen Windgeneratoren merklich zum Tragen. Ungleichmäßig anströmender Wind bei vertikaler Windscherung (links mehr Wind als rechts), bei Turbulenzen und Windschatteneffekten in Windparks oder seitlich drehender Wind mit Schräganströmung erzeugen bei Rotordurchmessern von insbesondere über 120 Metern eine Hebelkraft, die von den umlaufenden Blättern aufgenommen wird und von der Gondel als Torsionskraft in den Turmschaft weitergegeben wird. Diese Torsionskräfte spielen neben den am Turmschaft angreifenden Hebelkräften bei dynamischen Beanspruchungen mit zunehmenden Bauteilgrößen eine immer größere Rolle. Die Biege- und Torsionseigenfrequenz des Turmes und die Erregerfrequenz der Großkomponenten des Windgenerators liegen unter Berücksichtigung eines hinreichend großen Abstandes zwischen Eigen- und Erregerfrequenz zu dicht beieinander, weswegen das erfindungsgemäße Bauprinzip die Kombination von Abspannung und reinen Stahlturmschäften aus dem genannten Grund nicht bevorzugt. Schwingungsarmut ist trotz der geforderten und erwünschten Schlankheit der Turmkonstruktion ein Kernkriterium einer modernen WEA in Bezug auf deren Leistungsfähigkeit, da sämtliche mit dem Turm verbundenen Komponenten auch im ungünstigsten Lastfall ihre volle Betriebssicherheit gewährleisten müssen und insbesondere beim Blattdurchgang am Turmschaft auch bei maximal ungünstigen Auslenkungen mehrerer Bauteile keine Kollision verursachen dürfen. Das gilt demzufolge auch im Umkehrschluß für Ertragsminderungen durch Abschaltungen oder suboptimale Betriebszustände, sofern Belastungsgrenzen und Anregungsfrequenzen oder dgl. den maximal möglichen Ertrag herkömmlicher Anlagen schmälern. Tendenziell biege- und torsionsweichere vollwandige Stahlkonstruktionen, deren Materialwiderstand zu gering ist, eignen sich für leistungsstarke Windgeneratoren mit schlanken langen Bauteilabmessungen darum nicht.

Gleiches gilt für Gittermasten, die als schlanke abgespannte Konstruktionen, wie beispielsweise Sendemasten oder Windmessmasten, keine nennenswerten und seitlich weit ausladenden Kopflasten tragen können.

Als weiterer Punkt sei angeführt, dass herkömmliche eingespannte und abgespannte Konstruktionen keine, durch Stellglieder an den Vor- und oder Abspanngliedern veränderlichen Eigenschaften aufweisen, die die Steifigkeit oder die mögliche Auslenkung des Turmbauwerkes beeinflussen, um somit den Generator in verbesserter Art und Weise mit der rotierenden Masse zu halten, als herkömmliche Turmbauten dies tun. Hier sei insbesondere die aerodynamische Dämpfung erwähnt, bei der bei herkömmlichen Bauweisen der Turm in der immer gleichen Weise nachgibt und keine variabel einstellbares Antwortverhalten auf die eingetragenen Lasten insbesondere durch Rotorschub am Kopfflansch zuläßt. Herkömmliche Turmbauwerke reagieren nur aufgrund der voreingestellten Materialeigenschaften, Massenträgheiten und den konstruktiven Ausbildungen der Konstruktion in der immer gleichen Art und Weise. Dieses Verhalten hat vorzeitige Ermüdung oder umgekehrt einen höheren Materialverbrauch sowohl im Turmbauwerk, als auch in den Rotorblättern zur Folge, um die gewünschten Eigenschaften in Bezug auf Elastizität, Steifigkeit, Schwingungsverhalten und zu vermeidenden Anregungsfrequenzen der Bauteile, also das aeroelastische Zusammenspiel von Rotorblättern, Turbine und Turmbauwerk als Einheit, zu erzielen. Bei Hybridturmbauweisen hat dieses Verhalten zudem den Nachteil, dass der untere, längere Turmabschnitt aus Beton, sehr steif ausgebildet ist und nur der obere Teil des Turmes in Stahl nachgibt, was einer Drehung der rotierenden Masse um eine verkürzte Achse in der Nähe des Adapterflansches zwischen Beton und Stahlturm zur Folge hat, was wiederum Corioliskräfte in den drehenden Flügeln mehrblättriger Rotoren zur Folge hat, die dadurch zu unerwünschten Schwingungen angeregt werden.

Für den Fall, dass vertikalachsige Rotoren zum Einsatz kommen, sind insbesondere sehr stark anregende periodische Frequenzen durch die Drehung der Rotorblätter um die Längsachse des Turmes nachteilig. Die durch diesen Effekt in den Turm eingeleiteten Kräfte sind infolge der üblichen Steifigkeit der Rotorblätter dieses Analgentyps um ein Mehrfaches größer als vergleichbare Kräfte im Laufe einer Umdrehung bei horizontalachsigen Mehrflüglern. Das Turmbauwerk wird erheblich stärker belastet und neigt durch die eingetragenen Kräfte zu präzessionsähnlichen Schlinger- und Taumelbewegungen, was durch reinen Materialzuwachs nicht mehr wirtschaftlich aufgefangen werden kann. Die Problematik verschärft sich zusätzlich, sofern die Rotorblätter durch ein Pitch-System bei jeder Umdrehung ihren Winkel in Bezug auf die Drehachse in der Draufsicht ändern. Pitch-Systeme werden insbesondere bei großen vertikalachsigen Rotoren verwendet, was eine Anpassung des Turmes und dessen Antwortverhalten insbesondere an die eingebrachten periodischen aber auch die nichtperiodischen Lasten der vertikalen WEA um so erforderlicher macht.

Sowohl der einseitig eingespannte vertikal ausgebildete konische Kragarm mit maximalem Lasteintrag am Kopfende stößt ab Höhen von 150 Metern an eine Wirtschaftlichkeitsgrenze, als auch die bisher entwickelten abgespannten Turmtypen in Stahlbauweisen geben keine wirtschaftlich interessante Antwort auf die Erfordernisse großer Multimegawatt-WEA, insbesondere solcher mit großen Blattlängen in Schwachwindlagen, die sehr schlank und schwingungsanfällig sind.

An dieser Stelle werden nun neue vorteilhafte Turmbauweisen gegen das Vorurteil der Fachwelt für Turmbauwerke vorzugsweise ab einer Nabenhöhe von 140 Metern vorgeschlagen. Bislang galt es als nicht wirtschaftlich, nicht sinngemäß, nicht dem Trend des WEA-Turmbaus entsprechend, für Anlagen der Multimegawattklasse anstatt der freistehenden Türme abgespannte Konstruktionen vorzuschlagen, insbesondere nicht im Zusammenhang mit Betontürmen, weil diese z. B. angeblich zu schwer seien. Der Trend zu immer größeren und höheren Türmen wird bislang ausschließlich mit einem Upscaling bestehender Bauweisen bestritten. Die Physik einer Seilstatik und die Eigenschaften von Betonbauwerken ergäben unter Berücksichtigung der Anforderungen an einen hochdynamisch belasteten WEA-Turm keine wirtschaftliche oder sinnvolle Lösung, so die Meinung. Die zusätzlich schwingende Großkomponente eines Abspannelementes würde die Berechnung erschweren, den Bauprozeß unnötig verkomplizieren und die Wartung einer weiteren Komponente über den Betriebszeitraum erfordern. Zudem sei das Zusammenspiel der Frequenzen von Abspannelementen und den anderen Komponenten einer WEA nicht wirtschaftlich beherrschbar. Aus diesem Grund wird an bestehenden Bauweisen festgehalten.

Ein gattungsgemäßes Turmbauwerk zeigt die WO 2011/091799 A1. Hier werden während des Errichtens des Turmes, der aus vorgefertigten Ringen zusammengesetzt wird, in einem Zwischenring zur temporären Stabilisierung Abspannseile befestigt, um den noch nicht fertigen Turm bei der Errichtung seitlich auszurichten.

Die WO 2007/025555 A1 beschreibt das Herstellen eines Turmbauwerks, wobei Beton in eine Ringschalung unten eingedrückt wird und oben die Ringschalung ähnlich wie bei einem Extrudiervorgang verlässt. Ein Haltering am oberen Ende des vertikal wachsenden Turms ist während des Herstellungsvorgangs mit Stabilisierungsseilen seitlich gehalten, die eine vertikale Ausrichtung des Turms nur beim Herstellen sicherstellen sollen.

Dass dem nicht so ist, zeigt die Erfindung.

Die Erfindung sieht vor, auf der einen Seite die Problematik des freistehenden einseitig eingespannten hochreichenden Kragarmes und auf der anderen Seite die Torsionsweichheit bisheriger schlanker abgespannter Schaftquerschnitte zu umgehen und statt dessen mit einem optimalen Zusammenspiel aus Vorspannung, Abspannung und Materialeigenschaften, insbesondere den Materialwiderständen des Turmrohres, eine verbesserte Antwort auf das dynamische Verhalten des Gesamtsystems und somit eine verbesserte und optimierte Aeroelastik für Turmbauwerk und Windgenerator als Ganzes zu erzielen.

Die Lösung des Problems wird durch das erfindungsgemäße Bauprinzip nach Anspruch 1 erzielt, welches ein Abspannsystem derart mit einem Turmschaft verknüpft, dass die Abspannung und der im Turmschaft vorhandene Werkstoffwiderstand miteinander verbunden werden und somit eine wirtschaftlich günstigere Alternative im Vergleich zu den angesprochenen herkömmlichen Bauweisen insbesondere ab Turmschaft-Schlankheitsgraden größer 25, ab Nabenhöhen von insbesondere mehr als 140 Metern und Generatoren von insbesondere mehr als 2 Megawatt installierter Leistung darstellen. Die Erfindung bezieht sich insbesondere auf Windenergieanlagen, bei dem die Rotorblattlänge und die Turmhöhe in einem Verhältnis von eins zu drei oder darunter liegen.

Die Merkmale im Einzelnen:
Der erfindungsgemäße Spannbetonturm für WEA wird über seine gesamte Länge vorzugsweise mit einem konstanten Schaftaußendurchmesser oder mit konstanten Schaftaußenabmessungen (im Fall eines Polygons) erstellt. Die Zugglieder, die die Vorspannung zwischen unterem Ende des Spannbetonelements und dem Übergangsstück zum Windgenerator oder zu weiteren Stahlrohrelementen am Kopfende des Spannbetonturmes auf das Spannbetonelement aufbringen, verlaufen wahlweise in der Schaftwand des Spannbetons oder sind an der Wandung befestigt, oder in diese eingelassen, d.h. sie verlaufen radial einwärts der Außenhaut des Turmschafts.

Ein Teil der erforderlichen Vorspannung wird durch in der Draufsicht mindestens drei radial und in der Ansicht diagonal vom Turmschaft weglaufende Abspannelemente, die am Turmschaft vorzugsweise unterhalb des unteren Rotorblattdurchganges und bei mehrfacher Abspannung in verschiedenen Höhen des Turmschaftes an weiteren Unterteilungspunkten des Turmschaftes befestigt sind, in das Turmfundament oder in separate Fundamente, die radial um den Turmschaft angeordnet sind, geleitet. Die Abspannelemente verlaufen radial außerhalb des Turmschafts, sind also für den Betrachter des Turms von außen sichtbar. Das erfindungsgemäße Turmbauwerk für eine Windenergieanlage ist mit einem Turmschaft, einem Fundament und einem Übergangsstück im Bereich des oberen Endes des Turmschafts ausgeführt, wobei zu einer Längsachse des Turmschaftes geneigte, radial außerhalb der durch den Turmschaft definierten Außenhaut verlaufende Abspannelemente vorgesehen sind, durch die der Turmschaft zumindest abschnittsweise abgespannt ist, wobei radial einwärts der Außenhaut Zugglieder vorgesehen sind, durch die der Turmschaft zumindest abschnittsweise vertikal vorgespannt ist, und wobei der Turmschaft im Bereich zwischen dem Übergangsstück und dem Fundament aus Beton, insbesondere Spannbeton, hergestellt ist. Zudem wird die Abspannung nicht als starres System ausgeführt, sondern so ausgebildet, dass aerodynamische Dämpfung im bisher gekannten Umfang und darüber hinaus ermöglicht wird und mögliche Eigenresonanzen unterdrückt werden können. Es kommen Betonsorten unterschiedlicher Dichte und unterschiedliche Bewehrungsgrade- und Geometrien in der Schaftwandung zum Einsatz, um das Schwingungsverhalten des Turmschaftes zusätzlich positiv zu beeinflussen und Eigenfrequenzen und Oberschwingungen zu unterdrücken.

Ein variables Abspannsystem ermöglicht es, die Abspannung und die im Turmschaft durchlaufende erforderliche Vorspannung des Spannbetonquerschnittes aus Ortbeton oder Fertigteilbetonelementen in einem vorteilhaften Zusammenspiel aus Vorspannung, Abspannung und Werkstoffwiderstand so miteinander zu verbinden, dass ungewünschte Frequenzen durch Veränderung der Spanngrade ausgeschlossen werden können und aerodynamische Dämpfung trotz der hohen Steifigkeit des Turmbauwerkes und Eigenfrequenzdämpfung ermöglicht wird.

Im Übrigen umfasst die Erfindung auch eine Einrichtung, mittels der ein Stabilisieren eines allgemeinen abgespannten Turmbauwerks erfolgt, wobei während des Betriebs der Windkraftanlage aktuelle Daten über den Status des Turmbauwerks, insbesondere über die Zugspannung in zumindest einem Abspannelement des Turmbauwerks, ermittelt werden und abhängig von diesen Daten die Zugspannung in zumindest einem Abspannelement aktiv verändert wird.

Durch die Einrichtung werden nicht vor dem Erstbetrieb der Windenergieanlage die Abspannelemente vorgespannt, vielmehr wird während des Betriebes der Windenergieanlage das Turmbauwerk verstellt, um sie unterschiedlichen Lastzuständen anzupassen. Die Einrichtung ist eine motorisch betriebene Einrichtung, die auch permanent am Turmbauwerk angebracht ist.

Die Abspannelemente können ummantelte Paralleldrahtlitzen, ummantelte fettverpresste Litzenbündel, verzinkte Drähte, Seile, Metallstäbe, Kohlefaser- oder Glasfaserlamellen oder dgl. sein, die durch Seilaugen, Bolzen, Schweißnähte, Klammern, Verschraubungen, Spannkeile, Spannköpfe oder andere Verbindungselemente in ihren Widerlagern verankert sind oder in ihre Umlenksättel gebettet und befestigt sind.

Die Erfindung sieht vorzugsweise vor, Spannköpfe als Endpunkt mit einer lastwechselresistenten vorzugsweise Befestigung aus keilverankerten Litzen kugelig gelagerten oder zweiachsig beweglichen Litzen am oberen Abspannpunkt der Abspannelemente anzuwenden. Die Erfindung sieht vorzugsweise vor, am unteren Ende einen über ein Stellglied im Widerlager in der Länge variabel verstellbaren Endpunkt, vorzugsweise ebenfalls eine Spannvorrichtung, die mit dem Stellglied verbunden ist, zu verwenden.

Das Stellglied kann erfindungsgemäß mittels eines Antriebes und mindestens eines Meßelementes, welches die Vorspannung und die Schwingung des Abspannelementes und optional auch die des Turmschaftes und die Drehzahl der Rotoreinheit und die Position und Auslenkung des Windgenerators, sowie die Beschaffenheit und Geschwindigkeit der vor dem Rotor anströmenden Luftmasse überwacht, gesteuert oder geregelt bewegt werden, so dass die Vorspannung im Seil automatisch nachgestellt werden kann. Somit soll zum einen über den gesamten Jahreslauf mit seinen Temperaturprofilen und den damit einhergehenden thermischen Längenänderungen die optimale Vorspannung sichergestellt werden und zum anderen ggfs. die Vorspannung je nach Rotordrehzahl so angepaßt werden, dass insbesondere Rotoranregungen, wie beispielsweise p und 3p, und die Eigenfrequenzen des Turmes und die der Abspannelemente voneinander getrennt bleiben, sowie die in der Luft enthaltene kinetische Energie durch das Reaktionsverhalten der gesamten WEA und insbesondere des Turmes möglichst optimal entzogen werden, bzw. weniger Materialwiderstand den auftretenden Extremlasten entgegengestellt werden muß. Dies soll insbesondere dann der Fall sein, wenn die Frequenzgänge dieser Komponenten aus auslegungstechnischen Gründen sonst nicht sicher voneinander zu trennen sind. Eine variable, durch Stellglieder aufgebrachte Spannkraft auf die Abspannelemente verändert die Eigenfrequenzen des Turmes und die der Abspannelemente, so dass dem Rotor keine Drehzahlbeschränkung mehr auferlegt ist. Darüber hinaus kann diese Vorrichtung aus Meßelement und Stellglied Bodenbewegungen, wie Quellen oder Schwinden, in vorteilhafter Weise und sehr sicherer Weise entgegensteuern. Gleiches gilt für temperaturbedingte Längenänderungen. Das Kontrollelement kann ein Bauteil eines Condition Monitoring Systems der gesamten WEA sein.

In einer Variante dieses Merkmals zur Veränderung der Vorspannung im Abspannelement wird ein sekundäres Halteelement vorgeschlagen, das am Abspannelement befestigt ist und vorzugsweise zum Turmschaft zurückgeführt wird und dort ebenfalls befestigt wird. In der Variante ist dieses sekundäre Halteelement mit einem Stellglied ausgestattet, so dass es in seiner Länge variiert werden kann und somit das Abspannelement zur Seite auslenken kann, also entweder durch Heranholen dichter an den Turm heranziehen kann oder durch Lockerung von ihm entfernt. Diese seitliche Auslenkung, vorzugsweise auf halber Länge des Abspannelementes, verändert durch die geometrische Änderung sowohl die Zugspannung, als auch die Eigenschwingung im Abspannelement. Erfindungsgemäß hat diese zusätzliche (oder verringerte) Zugspannung im Abspannelement eine definierte Auswirkung auf die Vorspannung im Turmschaft und ändert dadurch dessen Eigenfrequenz oder dessen Auslenkung in gewünschter Weise temporär. Auf diese Weise geraten die Eigenfrequenz des Turmschaftes und die Anregungsfrequenzen der Großkomponenten des Windgenerators, insbesondere p und 3p, nicht in Konflikt.

Die Erfindung betrifft auch ein Turmbauwerk für eine Windenergieanlage mit einem Turmschaft, einem Übergangsstück im Bereich des oberen Endes des Turmschaftes, einem Fundament sowie zu einer Längsachse des Turmschaftes geneigten, radial außerhalb der durch den Turmschaft definierten Außenhaut verlaufenden Abspannelementen, durch welche der Turmschaft zumindest abschnittsweise abgespannt ist, wobei zumindest ein Abspannelement mit einer Einrichtung zum variablen Einstellen der Zugspannung des Abspannelements gekoppelt ist.

Die Einrichtung zum variablen Einstellen der Zugspannung im Abspannelement der Windkraftanlage zur temporären Veränderung der Turmeigenfrequenz und zu einem unterschiedlich einstellbaren Antwortverhalten für beispielsweise einen unterschiedlichen Grad der Auslenkung ist dabei bereits für sich genommen erfinderisch und nicht auf Stahlbetontürme oder die vorgeschlagenen Mischkonstruktionen beschränkt. Insbesondere ist auch eine Verwendung dieser Einrichtung für abgespannte, reine Stahltürme vorstellbar.

Die Übergangsstücke sind z.B. an dem Turmschaft angebrachte Zwischenflansche, insbesondere aus Metall, oder unmittelbar Stahlmasten oder Stahlmastbestandteile oder dergleichen. Ferner können aber auch auf die Übergangsstücke die Gondel oder ein Stahlmast aufgesetzt werden. Im Falle von vertikalachsigen Rotoren sind die Übergangsstücke Elemente, die die Verbindung zwischen dem Turmrohr und der vertikalen Generatoreinheit herstellen.

Insbesondere können die Abspannelemente durch Schwingungsdämpfungselemente zusätzlich daran gehindert werden, zum Schwingen angeregt zu werden. Schwingungsdämpfungselemente können aktiver oder passiver Natur sein, insbesondere Reibdämpfer, Induktionsdämpfer, hydraulische Dämpfer, vorzugsweise nahe dem unteren Abspannpunkt, sowie schwingungsdämpfende Massen, Halteelemente an Unterteilungspunkten des Abspannelementes, wie z. B. sekundäre Halteseile, o. ä.

Insbesondere werden die Länge der Abspannelemente, der Abspannwinkel und die beaufschlagte Spannkraft in Verbindung mit dem Materialwiderstand des Turmschaftes und dessen etwaiger Vorspannkraft so aufeinander abgestimmt, dass die Eigenschwingungen des Abspannelementes die Betriebsfähigkeit des abgespannten Turmbauwerkes durch Resonanzen des Abspannelementes nicht beeinträchtigen oder einschränken und der Einsatz von Schwingungsdämpfungselementen diese Sicherheit zusätzlich erhöht, indem sie beispielsweise windinduzierte Schwingungen und mögliche auftretende Oberschwingungen oder Galopping dämpfen und neutralisieren.

Insbesondere können die unteren Abspannpunkte der radial vom Turm weglaufenden Abspannelemente in eigenen Fundamenten verankert werden oder in einem gemeinsamen Fundament mit dem Turmschaft verankert werden. Insbesondere können im Falle von mehreren Abspannungen in unterschiedlichen Höhen am Turmschaft die Abspannelemente am Boden in gemeinsamen Fundamenten verankert werden.

Insbesondere können die Abspannelemente sich auf den oberen Abspannpunkt zulaufend teilen und gabeln und sowohl mittig, als auch tangential oder dazwischenliegend am Turmschaft befestigt werden oder dort umgelenkt werden.

Insbesondere kommen für den Turmschaft oder für Teile des Turmschaftes, insbesondere zwischen Fußpunkt und dem am weitesten oben liegenden Abspannpunkt, Spannbetonschäfte aus Ortbeton oder Fertigteilen zum Einsatz, die sich im Vergleich zu Stahlrohrschäften und Gittermastkonstruktionen insbesondere bei der großen Schlankheit durch die Massenträgheit des Betons deutlich torsionssteifer und schwingungsärmer verhalten und somit das Gesamtsystem WEA-Turm schwingungsärmer und dadurch leistungsfähiger und ermüdungsresistenter wird. Erfindungsgemäß wird durch den deutlich höheren Materialwiderstand des Spannbetonturmschaftabschnittes ein seitliches Wegdrehen des Windgenerators bei seitlich anströmendem Wind, bei horizontaler Windscherung oder bei Turbulenzen vermieden, was die Lebensdauer aller hierbei beanspruchten Bauteile günstig beeinflußt.

Insbesondere wird die notwendige Vorspannung zum Teil- oder Vollüberdrücken des Spannbetonschaftabschnittes unterhalb der obersten Abspannebene bis zum unteren Ende des Spannbetonschaftes nicht nur über Zugglieder im oder am Turm bewerkstelligt, sondern partiell auch über die Abspannung vorgenommen.

Insbesondere wird die Eigenfrequenz des Turmes durch die Verbindung der Kraft der Abspannung und der Kraft der Vorspannung frei wählbar und somit entfallen insbesondere die 'verbotenen Drehzahlbereiche' für den Rotor gänzlich. Die Turmeigenfrequenz verhält sich zu den Anregungsfrequenzen p und 3p der Rotoreinheit gemäß dem Campbell-Diagramm vorzugsweise "hart/hart", so dass insbesondere die niedrigen Drehzahlbereiche des Rotors genutzt werden können und eine größere Windausbeute erzielt werden kann.

Insbesondere kann das Zusammenspiel von Massenträgheit, Materialwiderstand, veränderbarer Abspannung und ggfs. zusätzlicher Vorspannung im Turmbauwerk den Turm in seinen Schwingungseigenschaften so insbesondere an den periodischen Lasteintrag von vertikalachsigen Rotoren anpassen, dass die Ermüdungsbelastung des Turmbauwerks sich infolge geringerer Resonanzen verringert und dass es zusätzlich wirtschaftlich möglich wird, mehrere Rotoren übereinander an einer Turmachse unterzubringen.

Insbesondere können der Spannbetonschaft oder Teile davon nicht nur in Stahlbeton, sondern auch in Textilbeton, insbesondere Kohlefaser-(spann)-beton, AR-Glasfaser-(spann)-beton oder in Mischungen aus diesen Bewehrungsarten ausgeführt werden. Zur Verbesserung des Torsionswiderstandes können sowohl die konventionellen Stahlbewehrungen, insbesondere aber die vorgeschlagene Textilbewehrung diagonal in Umfangsrichtung appliziert werden oder verlorene Schalungs- und Sandwichelemente ihren Beitrag leisten.

Insbesondere kann die Turmkonstruktion durchgehend aus dem vorgeschlagenen Spannbetonschaft vom Fußpunkt der Turmkonstruktion bis zum Übergangsstück (hier: Adapterelement) am Übergang zum Windgenerator hergestellt sein. Der Betonschaft kann vorzugsweise in kranlosen Gleitbauweisen hergestellt werden. Vorteilhafter Weise entfallen durch das Betongleitverfahren über die gesamte Errichtungsdauer des Betonturmschaftes das Stellen von Großkränen oder Turmdrehkränen, sowie notwendige Flächen für das Bereithalten von Großkränen und von Fertigteilen o. ä. Das Außenfinishing des Betonturmschaftes kann vorzugsweise eine textilbewehrte Feinbetonschicht sein. In einer Variante kann die Außenhaut des Betonschaftes auch eine verlorene Schalung, auch aus Metall, auch ein Sandwichelement, sein.

Insbesondere kann der Fußpunkt der Turmkonstruktion ein vorzugsweise vorgefertigtes Bauelement oder einen Schaftabschnitt aufweisen, in dem die unteren Zuggliedwiderlager oberhalb der Baugrundoberkante integriert sind und in dem Platz und Manöverfläche vorgehalten ist, die Spannvorrichtungen zum Einbau und zum Beaufschlagen der Vorspannung der Zugglieder zu Montagezwecken anzubringen und den bisher bei Spannbetontürmen üblichen Spannkeller unterhalb der Geländeoberkante zu erübrigen. Eine Variante der Erfindung sieht vor, dass die Zugglieder am Turmfuß nach außen umgelenkt werden und die Zuggliedwiderlager außen am Turm angebracht sind. Der Turminnenraum ist somit frei für sämtliche Installationen, die vor Witterung geschützt sein müssen. Erfindungsgemäß können sich die Zugangsöffnung zum Innenraum, sowie u. U. erforderliche Installationskanäle ebenfalls in diesem vorgefertigten Bauteil befinden. Der Zugang befindet sich vorzugsweise unterhalb der Zuggliedwiderlager. Das ist besonders vorteilhaft, wenn alle Zugglieder des Turmschaftes bis in das Bauelement am Turmfuß durchgeführt werden und der Abstand der Zugglieder zueinander sonst keine Öffnung mit der notwendigen Breite zuließe.

Insbesondere kann der Turmschaft auf Fundamentkonstruktionen errichtet werden, die keine oder wenig Hebelkräfte des auf dem Fundament errichteten Turmschaftes aufnehmen können. Das sind beispielsweise einfaches Aufbetonieren oder Befestigen auf anstehendem tragfähigem Gestein, Bohrpfahlgründungen in weichen Baugründen oder Fundamentstempel, deren Abmessungen lediglich durch die Tragfähigkeit des Bodens in vertikaler Richtung bestimmt werden und deren Abmessungen nicht durch (Hebel-)Kräfte bestimmt sind, die ein Umkippen verhindern müssen oder starke einseitige Belastungen infolge einer Hauptwindrichtung aufnehmen müssen, bis auf diejenigen des Tragfähigkeitsnachweises während des Bauzustandes, so lange der Turm oder Abschnitte davon frei stehen. Durch das vorzugsweise wenig seitlich überstehende Turmfundament mit geringen seitlichen Abmessungen verringert sich der Platzbedarf der Turmbauweise erheblich, insbesondere im Vergleich zu bisherigen Gründungsstrukturen für freistehende Turmbauten mit sehr großen Spreizungen am Turmfuß infolge der Hebelkräfte und seitlich weit ausladenden Gründungsstrukturen zum Nachweis der grundbruchfreien Kippsicherheit.

Insbesondere können der Außendurchmesser oder die Außengeometrie des Spannbetonturmschaftes über dessen gesamte Länge gleich bleiben und erforderliche oder mögliche Änderungen der notwendigen Querschnittsfläche der Schaftwandung durch einen veränderlichen Innendurchmesser oder eine variable Innengeometrie erzielt werden. Auf diese Weise kann beispielsweise ein Wartungsgerät an der Außenseite des Turmes leichter in vertikaler Richtung bewegt werden.

Insbesondere kann der Spannbetonturmabschnitt bis unter das Übergangsstück zum Windgenerator reichen. Eine Alternative sieht vor, dass der Spannbetonturmabschnitt bis zu einem Übergangsstück, auf das eine Turmkrone, beispielsweise Leichtbau- oder Stahlrohrsegmente, die bis unter den Windgenerator reichen, aufgesetzt ist. Vorzugsweise bildet ein etwaiges Übergangsstück zu weiteren Turmrohrelementen, die aus Gewichtsgründen im oberen Abschnitt der Turmkonstruktion zum Einsatz kommen können, gleichzeitig die obere, ggfs. die einzige Abspannebene an der Turmkonstruktion und die Ebene für das obere Widerlager oder Umlenklager der Spannglieder des Turmschaftes. Dieses Abspannwiderlager am Turmschaft wird generell als Übergangselement bezeichnet. Dieses Übergangselement liegt bei horizontalachsigen Windgeneratoren vorzugsweise nahe unterhalb des unteren Blattdurchganges. Erfindungsgemäß kann der Turmabschnitt vorzugsweise oberhalb der oberen Abspannebene in Leichtbauweisen erstellt werden, auch aus Stahl, auch aus Sandwichelementen und auch in Holz jeweils als einen Hohlraum umschließender Körper oder als Gitterstruktur oder als Mischkonstruktion.

Insbesondere befindet sich die obere Abspannebene in einer Höhe zwischen Turmspitze und Fußpunkt der gesamten Turmkonstruktion, welche diese Länge vorzugsweise im Verhältnis eins zu zwei oder in einem Verhältnis darunter teilt.

Insbesondere befindet sich eine mögliche untere Abspannebene in einer Höhe zwischen Turmspitze und Fußpunkt der gesamten Turmkonstruktion, welche diese Länge vorzugsweise im Verhältnis zwei zu eins oder in einem Verhältnis darüber teilt.

Insbesondere können der Turmschaft und die unteren Abspannpunkte in einzelnen Fundamenten befestigt sein. Eine Variante der Erfindung sieht jedoch vor, dass bei sehr weichen Böden vom Turmfundament sternförmige Streben nach außen laufen, die die Kräfte der Abspannelemente aufnehmen und durch eine Umlenkung der Kraft in einem zweiten Zugelement zurück an den Turm führen. Auf diese Weise kann auch bei sehr weichen Böden ein in sich geschlossener umlaufender Kraftverlauf garantiert werden. Zudem sieht eine Variante ein flaches kegelförmiges Fundament vor, das vorzugsweise flach auf den Untergrund gestellt wird und beim Rückbau leicht vollständig zu entfernen ist.

Insbesondere können nach dem vorgeschlagenen Turmbauprinzip auch mehrgeschossige Anlagen mit mehreren Windgeneratoren übereinander angeordnet realisiert werden.

Im Übrigen betrifft die Erfindung auch ein Verfahren zum Stabilisieren eines oben beschriebenen Turmbauwerks, bei dem während des Betriebs der Windkraftanlage aktuelle Daten über den Status des Turmbauwerks, insbesondere über die Zugspannung in zumindest einem Abspannelement des Turmbauwerks, ermittelt werden und abhängig von diesen Daten die Zugspannung in zumindest einem Abspannelement aktiv verändert wird.

Die zuvor beschriebenen und in den Vorrichtungsansprüchen angegebenen Merkmale können ausdrücklich auch beim Verfahren vorgesehen sein.

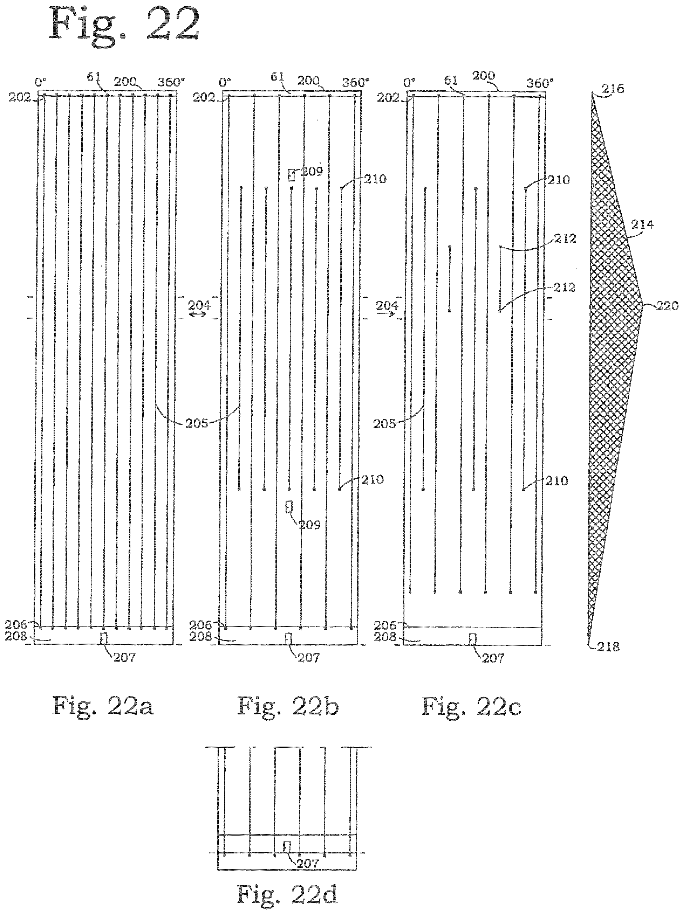

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:

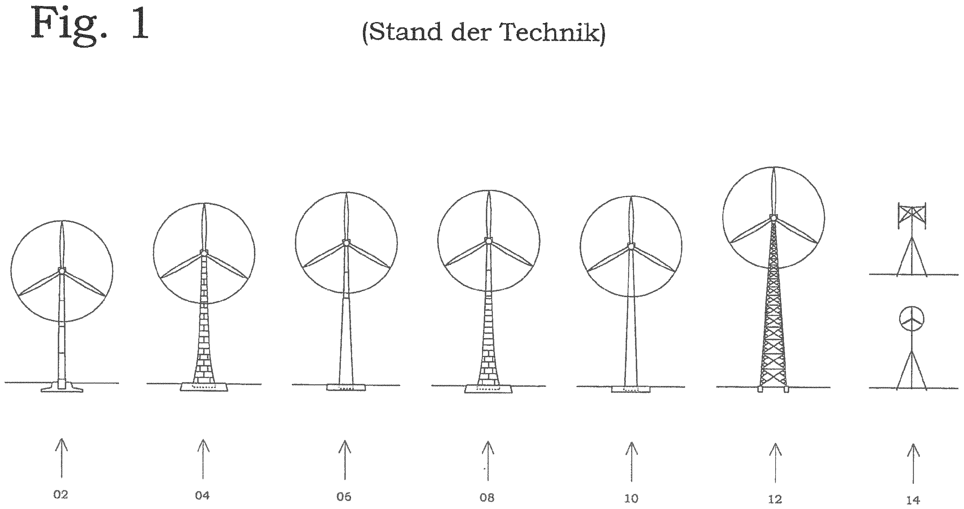

Figur 1 eine Auflistung aktuell am Markt verfügbarer WEA-Türme und gängiger Trends nach einhelliger Meinung der Fachwelt. 02 zeigt schematisch einen Turm auf einem Fundamentkörper aus mehreren Stahlrohrschüssen mit Vollwandquerschnitt. 04 zeigt einen schematischen Betonturm aus Fertigteilen auf einem Fundamentkörper. 06 zeigt einen freistehenden Hybridturm, der im unteren Abschnitt aus Ortbeton und im oberen Abschnitt aus Stahlrohrschüssen besteht. 08 zeigt eine abgewandelte Bauweise, bei der die Betonsektion aus Fertigteilen zusammengesetzt ist. 10 zeigt einen reinen Ortbetonturm auf einem Fundamentkörper. 12 zeigt schematisch einen Gittermast. Diese Bauweise, die in der Regel auf Einzelfundamenten gründet, erreicht nach dem Stand der Technik die größten Nabenhöhen. 14 zeigt handelsübliche Kleinwindkraftanlagen mit horizontaler und vertikaler Achse abgespannt auf einem Stahlrohr.

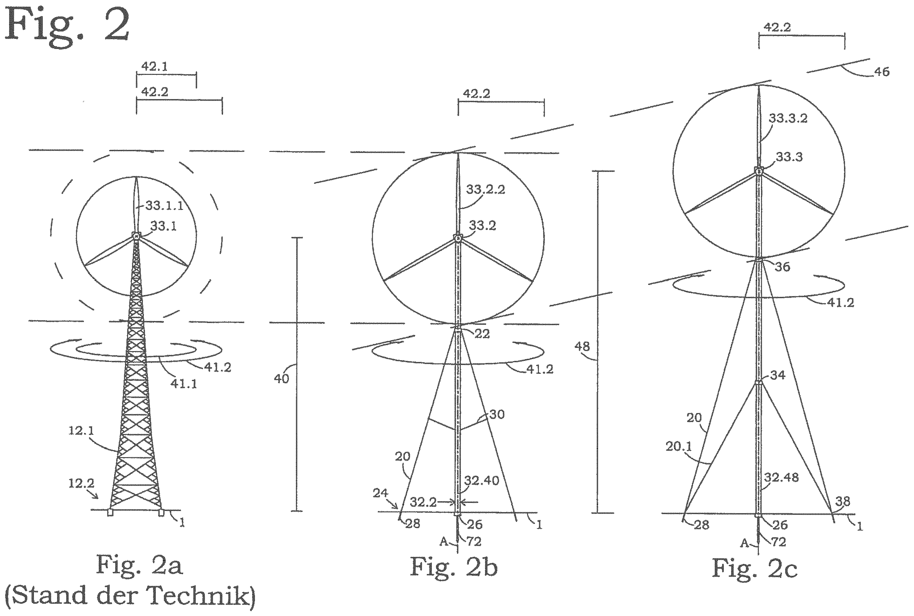

Figur 2 erläutert eine Kernproblematik, aus der die Erfindung hervorgeht. Figur 2a zeigt einen WEA-Turm mit sehr großer Nabenhöhe 40, auf den ein Windgenerator 33.1 mit einem Rotorblatttyp 33.1.1 mit einer Blattlänge 42.1, montiert ist. Dieser Rotorblatttyp ist geeignet für ein mittleres Windprofil mit einer Weibullverteilung, deren Maximum bei mittleren Windgeschwindigkeiten liegt. Die Rotorblattlänge ist dementsprechend kurz im Verhältnis zu den Dimensionen der Gesamtanlage. Diese große Nabenhöhe 40 mit dem Generator 33.1 ist wirtschaftlich nach dem Stand der Technik nur mit der dargestellten Gittermastkonstruktion 12.2 zu realisieren. Die Gittermastkonstruktion muß nicht nur die Hebelarmkräfte über die Länge 40 aufnehmen, sondern auch die Torsionskräfte 41.1, die aus der Blattlänge 42.1 entstehen. Eine entsprechende Spreizung am Turmfuß ist hier bereits erforderlich. Sollen auf dem Turm 12.1. Anlagen montiert werden, die für Schwachwindgebiete mit einer Weibullverteilung, die ihr Maximum bei niedrigeren Windgeschwindigkeiten aufweist, geeignet sind, so ist eine entsprechend größere Blattlänge 42.2 erforderlich, was die an der Turmkonstruktion angreifenden Torsionskräfte 41.2 entsprechend vergrößert und die gewählte Konstruktion nach dem Stand der Technik unwirtschaftlich macht. Die Spreizung 12.2 am Turmfuß nähme zu, eine Anregung der Rotorblätter durch die Eigentorsionsfrequenz des Turmbauwerkes wäre zu befürchten und ein wirtschaftlicher Betrieb der Anlage durch den Ausschluß der entsprechenden Drehzahlbereiche des Rotors mithin stark eingeschränkt.
Figur 2b zeigt die Erfindung, bei der der Windgenerator 33.2, der insbesondere für Schwachwindstandorte geeignet ist und der schlanke Rotorblätter 33.2.2 mit einer großen Länge 42.2 aufweist, auf den erfindungsgemäßen abgespannten Turmschaft montiert ist, dessen Schaft 32.40 als torsionsresistenter Betonhohlköper ausgebildet ist und trotz der sehr großen Schlankheit 32.2 die auftretenden Torsionskräfte 41.2 wirtschaftlich und materialsparend vom Windgenerator 33.2 in das Fundament 26 und die Gründung 72 übergibt. Das Biegemoment des Turmschaftes wird durch eine Abspannung 20, die an einem Abspannpunkt 22, vorzugsweise knapp unterhalb des Rotordurchgangs, am Turmschaft 32.40 befestigt ist, über radial um den Turmschaft 32.40 angeordnete Abspannpunkte 24 mittels einer Fundamentierung 28 in den Baugrund abgetragen. Zur Reduktion der freien Schwingungslänge kann das Abspannelement 20 durch ein sekundäres Element 30 gehalten werden.
Figur 2c zeigt eine Variante der Erfindung, die den Trend 46 zu immer größeren WEA mit immer größeren Nabenhöhen 48 zum Betrieb immer leistungsfähigerer Anlagen 33.3 mit immer längeren Blättern 33.3.2 in den ertragreicheren höheren Windschichten ermöglicht. Der schlanke und torsionssteife Betonturmschaft 32.48 wird über eine obere Abspannebene 36, vorzugsweise unterhalb des Rotordurchganges, und über eine untere Abspannebene 34 gehalten, die dem Turm zusätzlich Momentenkräfte entnimmt und über die Abspannelemente 20 und 20.1 in den Baugrund 1 ableitet. Die Abspannpunkte 38 am Boden können erfindungsgemäß mit einem gemeinsamen Fundament 28 im Baugrund 1 verankert sein.
   In gleicher Art und Weise können auch vertikalachsige Rotoren in großen Höhen montiert werden.

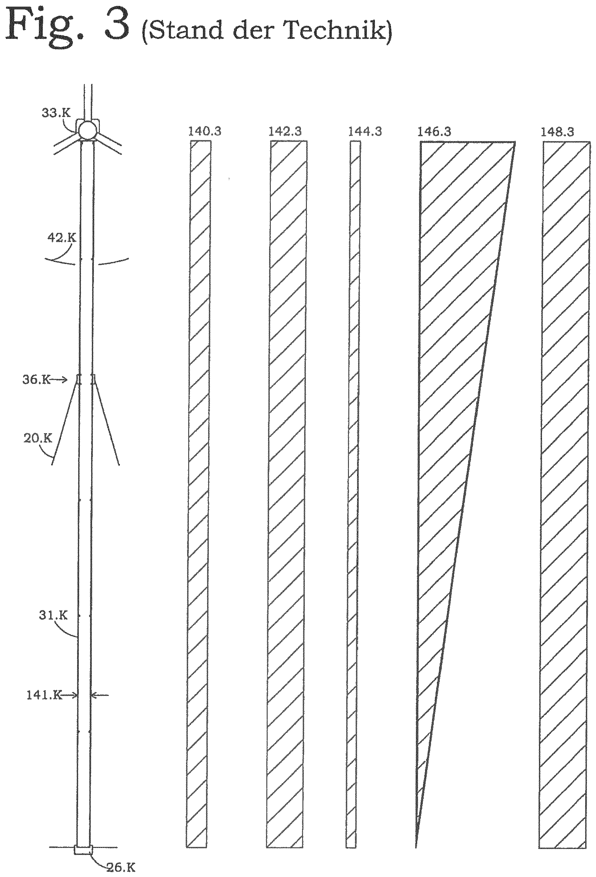

   Die Figuren 3 bis 7 veranschaulichen relevante Werte, aus denen hervorgeht, warum das erfindungsgemäße Bauprinzip gegen das Vorurteil der Fachwelt eine Kombination aus einem Betonturm mit einer Vorspannung PLUS einer zusätzlichen Abspannung vorsieht.
Figur 3 zeigt zunächst eine bestehende Konstruktion einer Kleinwindkraftanlage, bestehend aus einem Stahlrohr 31.K mit Vollwandquerschnitt und einer anskizzierten Abspannung 20.K mit Abspannpunkt 36.K. Das sehr geringe Widerstandsmoment 144.3 dieser Bauweise erzeugt bei der großen Schlankheit des Turmrohres 141.K bei seitlich angreifenden Kräften am Kleinwindgenerator 33.K, wie in Figur 2 dargelegt, eine Torsionsauslenkung 146.3, die nach oben zum Generator 33.K hin deutlich zunimmt. Die Weichheit des Materials 144.3 und die geringe Masse 140.3 bedeuten eine entsprechend hohe laterale, longitudinale und tordierende Anregungsanfälligkeit 148.3 entlang und um die eigene Achse über die gesamte Länge des Schaftes. Das geringe Widerstandsmoment 144.3 einer solchen abgespannten Konstruktion erlaubt kein Upscaling dieser Bauweise, da ein sicherer und wirtschaftlicher Betrieb des Windgenerators durch die maximal möglichen Auslenkungen am oberen Ende des Turmes und zahlreiche anregende Interferenzen der Schwingungen, insbesondere von Turmeigenfrequenzen, Turmtorsion, Blatteigenfrequenz und der Anregung durch die Blattrotation p und 3p, insbesondere bei Multimegawattanlagen ab 2MW installierter Leistung nicht gewährleistet sind.
   Analog erzeugen vertikalachsige Rotoren ebenfalls Anregungen, die auf den Turm wirken, die ein reines Upscaling dieser Konstruktion unwirtschaftlich machen.

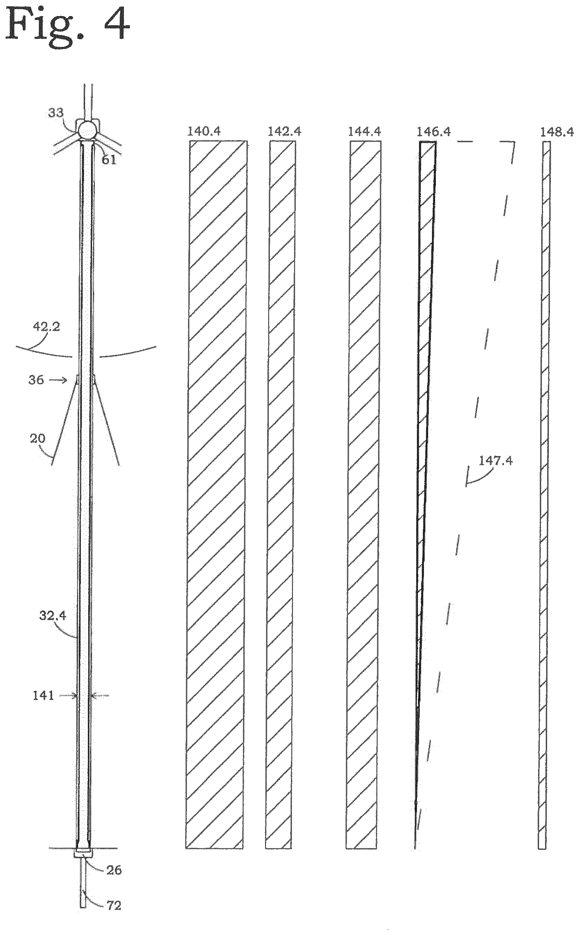

Figur 4 zeigt das erfindungsgemäße Bauprinzip, bei dem ein Betonhohlkörper, vorzugsweise ein Betonrohr, welches unter Vorspannung steht, mit einer Abspannung 20 im Abspannpunkt 36 versehen wird. Das wesentlich höhere spezifische Turmgewicht pro Meter 140.4, der sehr hohe Materialwiderstand von Stahlbeton, insbesondere von Spannbeton 142.4 verringern bei gleicher angreifender seitlicher Kraft am Windgenerator 33 die Werte der maximalen Torsionsauslenkung 146.4 auf Bruchteile der Bauweise in Figur 3 (gestrichelte Linie). Die Anregungsanfälligkeit 148.4 sowohl in lateraler und longitudinaler Weise, sowie um die eigene Achse verringert sich über die gesamte Länge des Schaftes erheblich und ermöglicht somit einen sicheren Betrieb des Windgenerators 33 auch in großen Höhen und bei großer materialeffizienter Schlankheit 141.

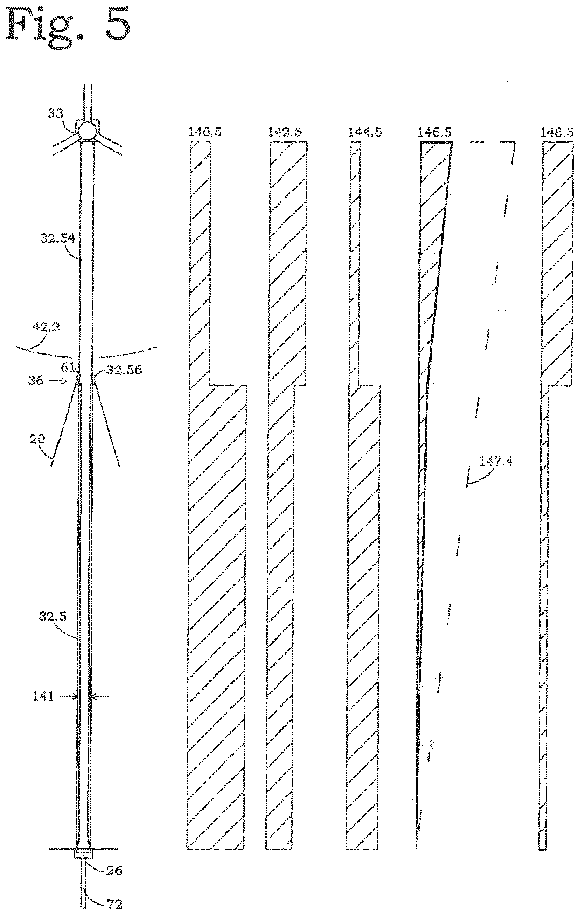

Figur 5 zeigt eine Variante des erfindungsgemäßen Bauprinzips, bei dem der Betonschaft 32.5 bis zu einer Abspannung 20 mit Abspannpunkt 36 geführt wird, die vorzugsweise an einem Übergangselement 32.56 angebracht sein kann, auf das eine Turmkrone aus weiteren Elementen 32.54 in Leichtbauweisen und einem geringeren Materialwiderstand der Schaftkonstruktion aufgesetzt sein kann, um den Generator 33 zu tragen. In dieser Ausführungsform bildet das Übergangselement gleichzeitig das Übergangsstück. Diese Bauweise kann insbesondere dann nützlich sein, wenn das Turmbauwerk eine bestimmte Gesamtmasse nicht überschreiten soll oder darf und man im oberen Teil des Turmes auf leichte, aber wiederum weichere Bauweisen zurückgreift. Die Torsionsauslenkung 146.5 und die maximale Anregungsanfälligkeit 148.5 sind auch bei dieser Kombination aus mehreren Turmabschnitten mit unterschiedlichen Bauweisen deutlich geringer, als bei der in Figur 3 dargestellten.

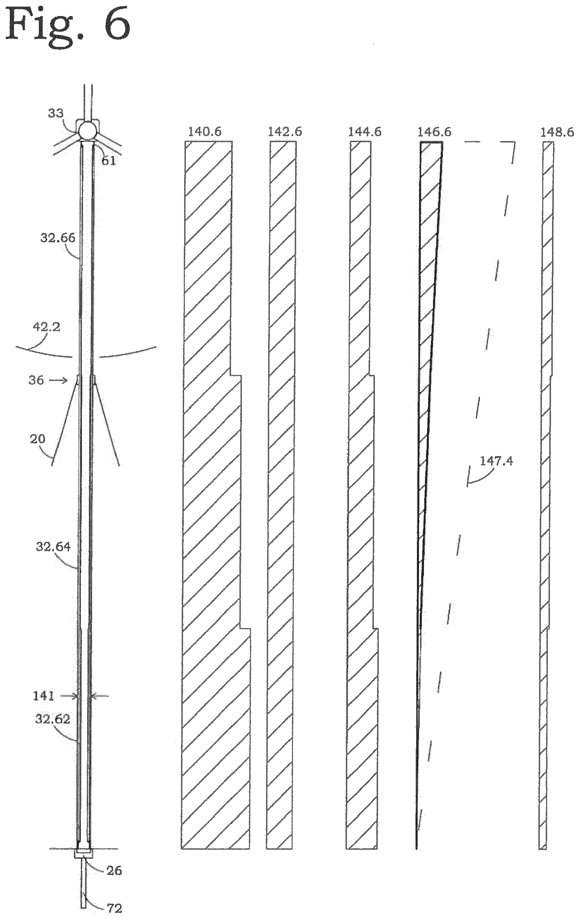

Figur 6 zeigt ebenfalls eine vorzugsweise Variante des erfindungsgemäßen Prinzips, bei dem unterschiedliche Betonschaftwandstärken 32.62, 32.64 und 32.66 mit unterschiedlichen spezifischen Gewichten je Turmmeter 140.6 der Schaftwandung bei gleichbleibender Schlankheit 141 zum Einsatz kommen und zusätzlich unterschiedliche Betonfestigkeitsklassen mit unterschiedlichen Materialwiderständen 144.6 verbaut werden können. Auch hier sind die Torsionsauslenkung 146.6 und die Anregungsanfälligkeit 148.6 sehr gering. Zudem verhindert eine solche Bauform sehr wirkungsvoll mögliche Oberschwingungen über die gesamte Länge des Turmes, da jeder Schaftabschnitt trotz des gleichen Außendurchmessers unterschiedliche Eigenfrequenzen aufweist.
   In Bezug auf vertikalachsige Rotoren ist insbesondere die geringe Anregbarkeit dieser Konstruktionen mit ihren genannten Eigenschaften zu nennen.
   Kombinationen der Bauweisen sind ebenfalls möglich.

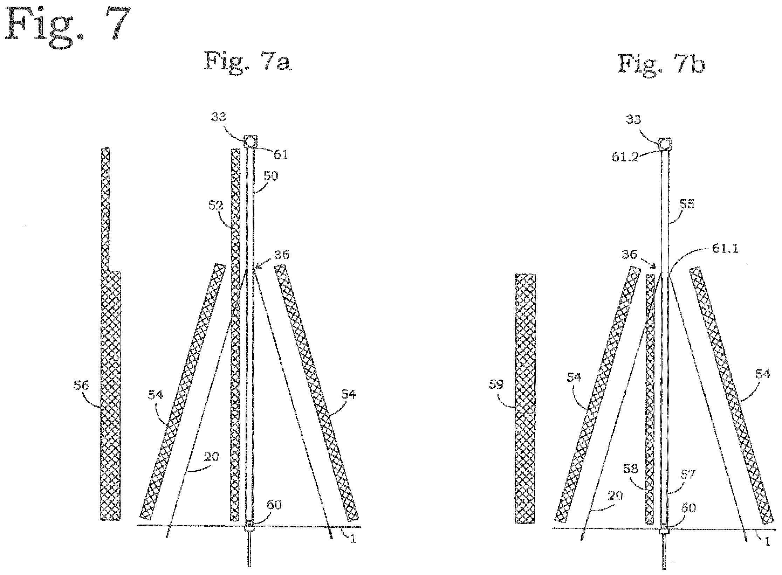

Figur 7 zeigt schematisch die Vor- und Abspannkräfte und deren vorteilhafte Addition.
Figur 7a zeigt die bevorzugte Variante, bei der der Spannbetonschaft vom Fuß des Turmes und dem weiter unten erläuterten bevorzugten Fußelement 60 bis zum Übergangsstück 61 am oberen Ende des Turmes unter dem Windgenerator 33 reicht. Die Vorspannkraft 52 entlang des Turmschaftes 50 wird vorzugsweise über die gesamte Länge des Turmes aufgebracht und durch die Vorspannkraft 54 der Abspannseile 20 ergänzt. Auf diese Weise entsteht eine Gesamtvorspannung 56, die in vorteilhafter Weise den Schaftquerschnitt überdrückt und ihm so die nötige Steifigkeit verleiht. Die Abspannelemente übernehmen erfindungsgemäß nicht nur die Funktion des Verhinderns des seitlichen Kippens, sondern tragen auch einen Teil zur Überdrückung des Betonturmschaftes bei.
Figur 7b zeigt eine Variante, bei der der Spannbetonschaft 57 vom Fuß des Turmes 60 bis zur Abspannebene 36 reicht und mit einer eigenen Vorspannung 58 beaufschlagt ist, und von dort, vorzugsweise nach einem Übergangsstück 61 als nicht vorgespanntes Bauteil 55 bis an den Kopfadapter 61 des Turmes unter die Gondel 33 weitergeführt wird. Auch hier ergänzen sich die Spannkräfte 58 der Zugglieder entlang des Turmes 57 mit der Spannkraft 54 der Abspannelemente 20 in einer vorteilhaften Weise zu einer gemeinsamen Vorspannung 59, die so bemessen ist, dass der Turmschaft die nötige Steifigkeit durch die Überdrückung 59 erhält.

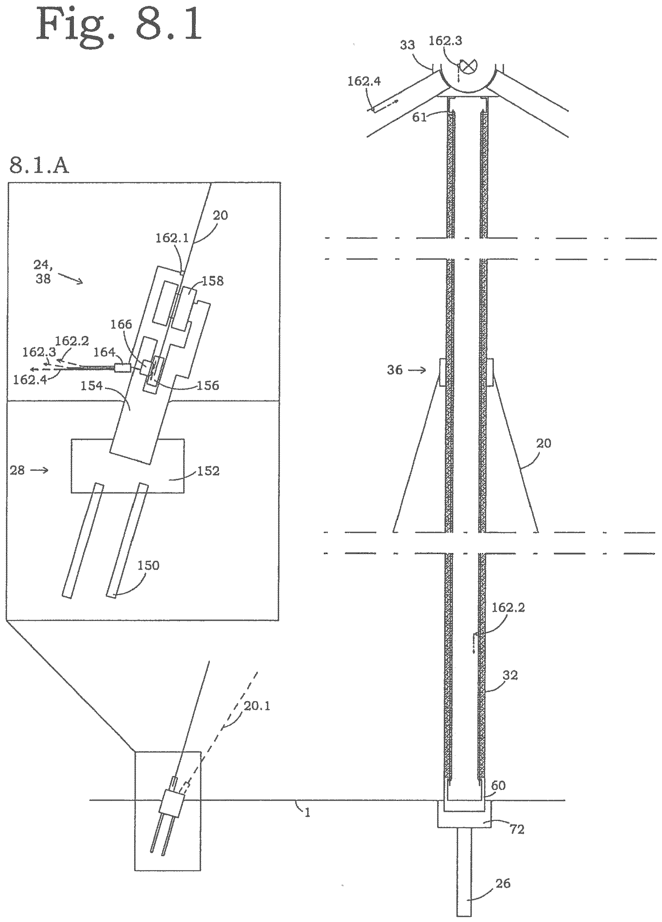

Figur 8.1 zeigt rechts beispielhaft einen skizzenhaften Schnitt durch die erfindungsgemäße Bauweise und in der Vergrößerung 8.1.A Bestandteile des Widerlagers mit Stellglied 166 der Abspannung 20 am unteren Ende, die in ihrer Funktionalität vorzugsweise Bestandteile der Erfindung sind. Das Abspannelement 20 wird mit einen Befestigungselement 156, beispielsweise einem Seilauge, in dem Widerlagerelement 154 eingespannt und ist über ein Stellglied 166 in Längsrichtung der Abspannung beweglich gelagert. Sowohl die Vorspannung, als auch mögliche Schwingungen des Abspannelementes werden über einen Sensor 162.1, der vorzugsweise am Abspannelement angebracht sein kann, an eine logische Einheit 164 übermittelt, die Steuersignale zum Nachspannen oder Entspannen des Abspannelementes für das Stellglied geben kann. Weitere Sensoren befinden sich optional am Turmschaft, um dessen Schwingungsverhalten zu überwachen (162.2), an der Rotoreinheit, um die Drehzahl zu überwachen (162.3) und ggfs. auch im Rotorblatt, um dessen Eigenschwingung zu überwachen (162.4). Diese Verarbeitungseinheit kann die Rotordrehzahl, die Turmschwingung, die Seilschwingung, die Seilspannung und weitere erforderliche Werte miteinander verrechnen und auf diese Weise die Steuersignale zum Nachspannen und Entspannen des Abspannelementes an das Stellglied geben. Ein Dämpfungselement 158 unweit des Widerlagers reduziert insbesondere windinduzierte Schwingungen des Abspannelementes. Das Widerlager ist vorzugsweise in ein Fundament 152 eingebettet, das über Gründungselemente 150, wie Felsanker, Felsnägel, Schwerkraftfundamente, Bodenanker o. ä. die Lasten in den Baugrund abgibt. Die gestrichelte Linie 20.1 soll verdeutlichen, dass mehrere Abspannebenen mit unterschiedlichen Inklinationen in einem gemeinsamen Fundament verankert sein können.

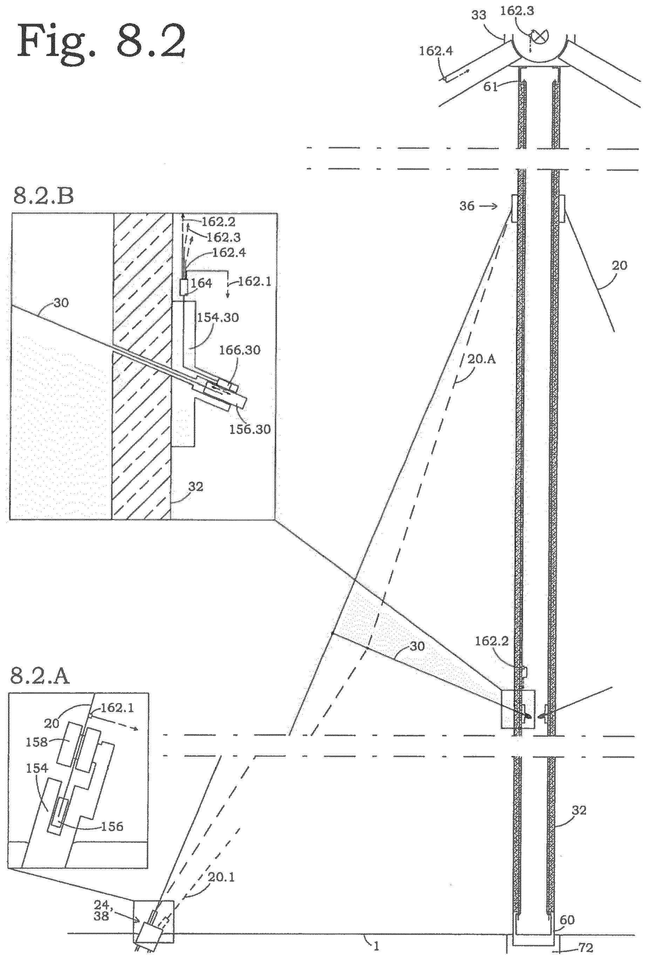

Figur 8.2 zeigt eine Variante, bei der die Zugspannung im Abspannelement 20 nicht an dessen Fuß- oder Kopfpunkt über eine Längenänderung durch ein Stellglied in Längsrichtung herbeigeführt wird, sondern über ein sekundäres Element 30, welches am Abspannelement festgemacht ist und welches den Verlauf des Abspannelementes dadurch verändern kann, dass es das Abspannelement näher an den Turmschaft heranzieht und dabei stärker spannt (20.A), oder es wieder locker läßt, so dass es in die ursprüngliche Lage zurückkehrt. Zu diesem Zweck wird ebenfalls ein Stellglied 166.30 benutzt, welches das sekundäre Element 30 in seiner Längsrichtung bewegen kann. Das Stellglied wird ebenfalls über eine logische Einheit angesteuert, das die eingehenden Daten der Sensoren 164.1, 164.2, 164.3 und 164.4 verarbeitet und daraus einen Wert für das Stellglied errechnet, der über das Element 30 das Abspannelement so spannt, dass die zu- oder abnehmenden Zugkräfte sich in Verbindung mit der Vorspannung des Turmschaftes derart ergänzen, dass Anregungsfrequenz und Eigenfrequenz stets voneinander getrennt bleiben.
   Generell verläuft die Abspannung radial außerhalb der durch die Außenseite des Turmschafts gebildeten Außenhaut 400 schräg nach unten. Die für die Vorspannung des Betons verantwortlichen Zugglieder verlaufen radial einwärts des Außenhaut, d.h. entweder im Beton oder im Hohlraum, der durch die Turmwand gebildet ist, d.h. im Inneren des Schafts.

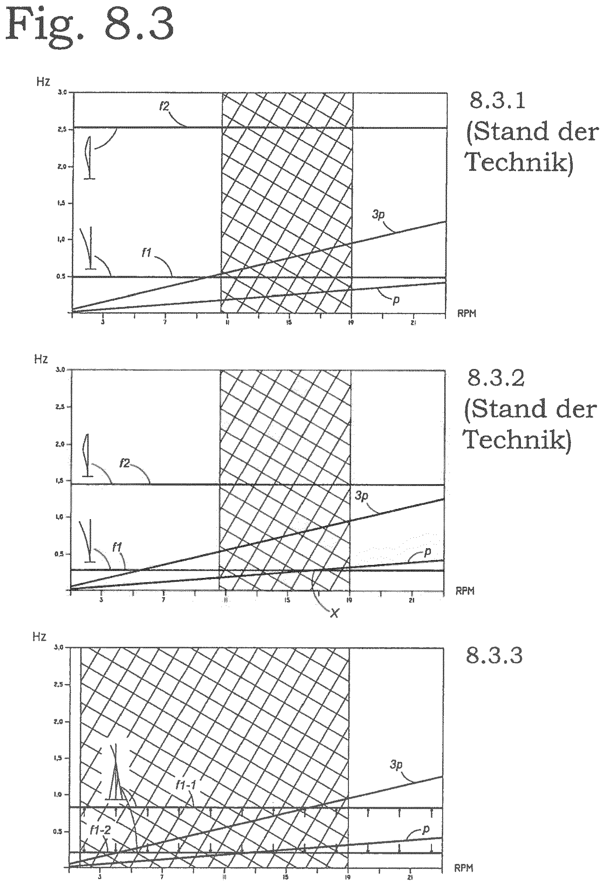

Figur 8.3 zeigt in drei Campbell-Diagrammen zunächst den Stand der Technik und dann die erfinderische Lösung mit einem Turmschaft, der in seiner Eigenfrequenz f1-1 bis f2-2 variabel einstellbar ist, indem das Zusammenspiel aus Zuggliedern verstellbare Zugspannungen auf den Turmschaft ausübt. 8.3.1 zeigt eine hart/weiche Auslegung des Turmes nach dem Stand der Technik und der heute am weitesten verbreiteten Bauweise. Die erste Turmeigenfrequenz f1 und die zweite Turmeigenfrequenz f2 sind so ausgelegt, dass in einem definierten Drehzahlbereich (schraffierte Fläche) es zu keiner Überlagerung von Eigenfrequenz und den Anregungsfrequenzen insbesondere der Rotorblätter 3p und der Rotordrehung p kommt. Das Diagramm 8.3.2 zeigt eine Resonanz/weiche Auslegung, bei der die erste Eigenfrequenz des Turmbauwerkes f1 und die Anregungsfrequenz p im Drehzahlbereich einen Schnittpunkt X aufweisen. Das Diagramm 8.3.3 zeigt die vorteilhafte Wirkung der Erfindung anhand des Campbell-Diagramms: Die Turmeigenfrequenz ist durch die Kombination aus Vorspannung und variabler Abspannung in einem gewissen Bereich von f1-1 bis f2-2 einstellbar. Auf diese Weise können die Schnittpunkte zwischen Eigenfrequenzen und Anregungsfrequenzen (insbesondere auch von vertikalachsigen Rotoren) umgangen werden, indem die Zugspannung der Abspannelemente variabel gestaltet wird. Der Nenndrehzahlbereich kann, anders als bei den anderen Turmauslegungen, vollkommen frei gewählt werden (größere schraffierte Fläche).

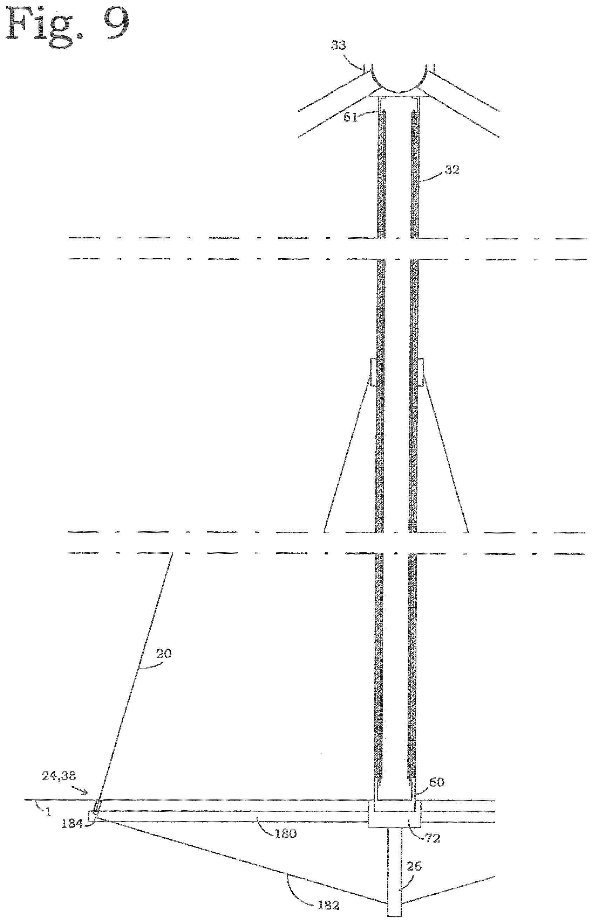

Figur 9 zeigt beispielhaft eine Gründungsvariante des gesamten Turmes inklusive Abspannung für sehr weiche oder nicht tragfähige Böden. In diesem Fall wird die Zugkraft des Abspannelementes 20 an dessen Fußpunkt 24, 38 über die Spitze eines Balkenelementes 180, das vorzugsweise vom Turmfundament 72 aus hervorgeht, umgelenkt und über ein Zugelement 182 in der Draufsicht sternförmig und in der Ansicht in einem flachen Winkel an das Fundament 72 oder die Gründung 26 des Turmschaftes zurückgeführt und dort verankert. Auf diese Weise können übermäßige Schwerkraftfundamente am Fußpunkt 24,38 des Abspannelementes 20 infolge der auftretenden Zugkräfte bei unsicherem Baugrund vermieden werden.

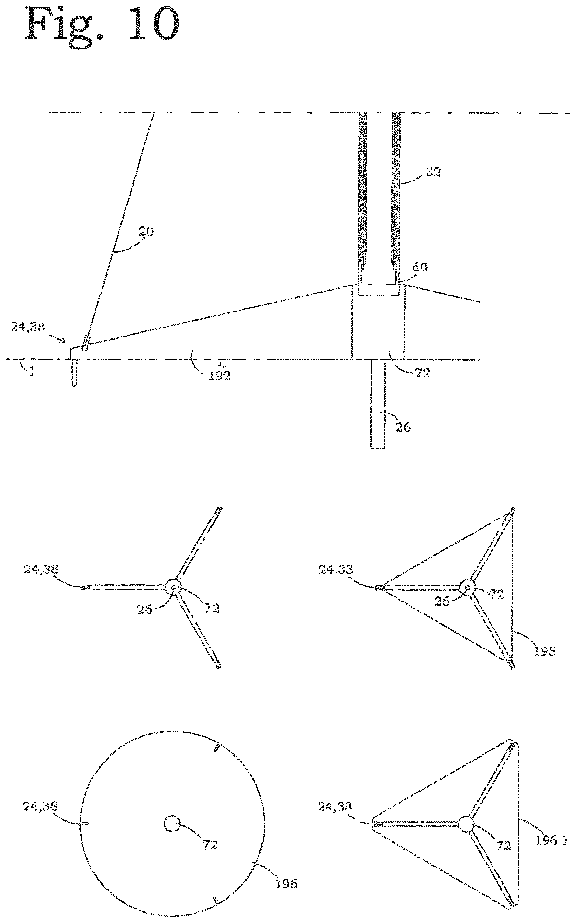

Figur 10 zeigt beispielhaft eine Variante des Turmfundamentes für unsicheren Baugrund, bei der wahlweise ein schnabelförmiger Balken 192 vom Turmfundament 72 zum Abspannpunkt 24, 38 wegführt werden kann, der das Abspannelement 20 aufnimmt, oder bei dem die vom Turmfundament 72 wegführende Struktur 186 teller-, scheiben- oder kegelförmig ausgebildet wird oder bei dem die Schnäbel untereinander zusätzlich über Zugelemente 195 verbunden sind oder in der Draufsicht ein Dreieck, vorzugsweise einen Tetraeder 196.1 bilden, um eine ausreichende Standsicherheit zu gewährleisten.

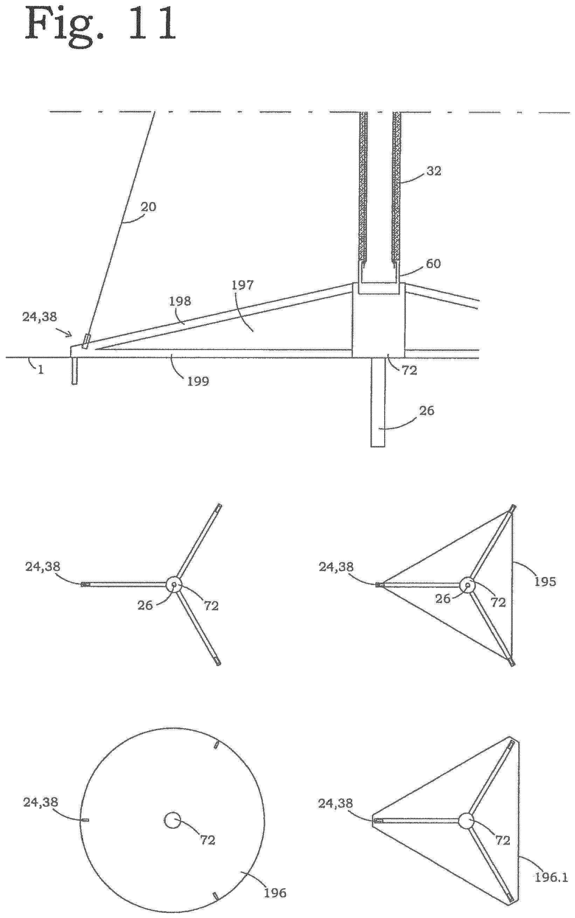

Figur 11 zeigt beispielhaft eine Variante zu Figur 10, bei der das vom Turm wegführende Element aufgelöst ist in einen Obergurt 198, einen Untergurt 199, die gemeinsam einen Hohlraum 197 umschließen, der zu Standsicherheitszwecken mit Füllmaterial befüllt werden kann.

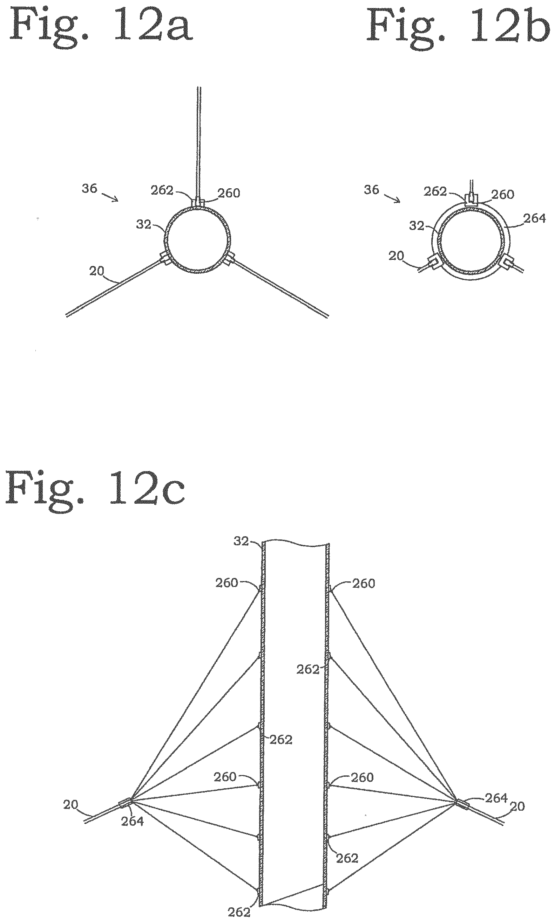

Figur 12a zeigt beispielhaft eine Variante des Abspannpunktes 36 in einer sehr einfachen Ausführung: Das Abspannelement 20 wird über ein Endstück 260 in einem aufnehmenden Element 262 am Turmschaft 32 befestigt. Figur 12b zeigt zusätzlich ein Verstärkungselement 264, das einem Ovalisieren des Turmrohrs oder einem Verbiegen anderer möglicher Turmgeometrien (z. B. von Polygonen) infolge der angreifenden Zugkräfte vorbeugt. Das Verstärkungselement kann innen oder außen am Turmschaft angebracht sein. Figur 12c zeigt beispielhaft eine weitere Variante, bei der sich das Abspannelement 20 an einem Element der Verzweigung 264 aufteilt und an mindestens zwei Punkten am Turmschaft übereinander befestigt ist. Auf diese Weise wird das maximale Biegemoment im Bereich der Abspannung reduziert und Spannungsspitzen vermieden.

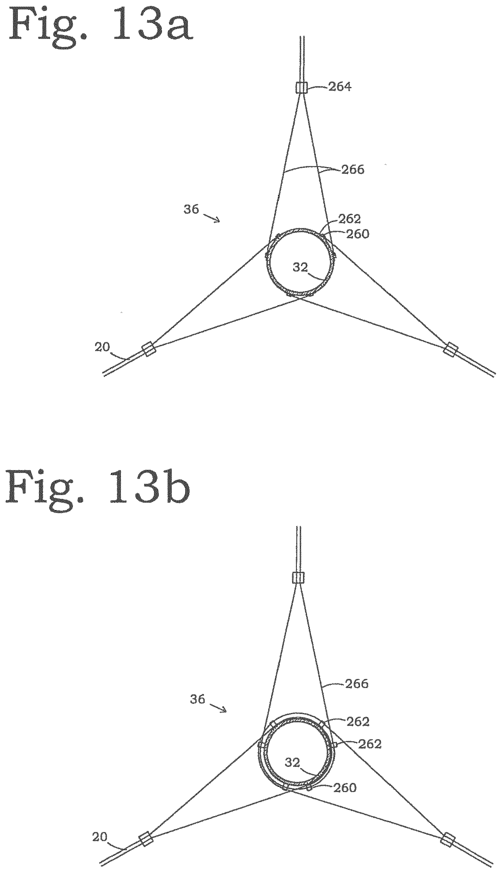

Figur 13a zeigt beispielhaft eine Variante des Abspannpunktes 36, bei dem das Abspannelement 20 sich an einem Element 264 nahe des oberen Widerlagers verzweigt und das Endstück 260 tangential über das Übergangselement 262 oder Halteelement am Turmschaft 32 befestigt ist. Figur 13b zeigt eine Variante, bei dem das Abspannelement 20 schlaufenförmig um den Turm 32 herumgeführt wird und über Halteelemente 262 am Turm befestigt ist.

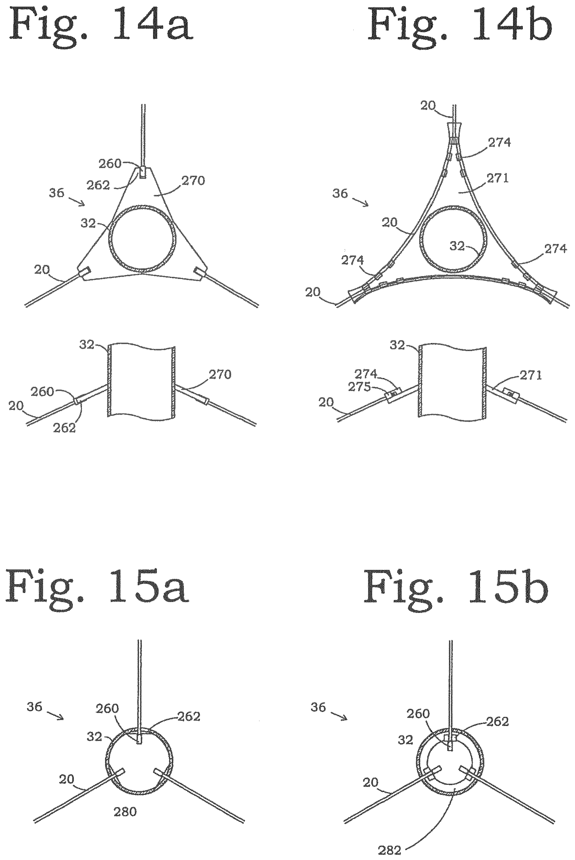

Figur 14a zeigt beispielhaft eine Variante des Abspannpunktes 36, bei der das Abspannelement 20 mit einem Endstück 260 versehen ist und in einem Element 270 verankert ist, das trapezförmig an den Turm 32 anschließt, um einen möglichst homogenen Kraftübergang zwischen Abspannelement 20 und Turmrohr 32 zu ermöglichen.
   In den Figuren 11 bis 14 ist das Endstück 260 vorzugsweise kugelig oder zweiachsig gelagert, so dass keine einseitigen Belastungen am Widerlager auftreten und alle Freiheitsgrade des oberen Widerlagers 36, das eine biegeweiche Drillfeder darstellt, gewährleistet sind.
Figur 14b zeigt beispielhaft eine Variante des Abspannpunktes 36, bei dem das Abspannelement 20 über einen Umlenksattel 271 geführt wird, der ebenfalls trapezoid an das Turmrohr 32 angeschlossen ist. Das Abspannelement wird über Halteelemente 274 gegen seitliche Verschiebung und Herausrutschen gesichert und der Umlenksattel ist an seinen Enden trompetenförmig aufgeweitet, um das Abspannelement nicht zu knicken.
Figur 15a zeigt beispielhaft eine Variante des Abspannpunktes 36, bei der das Abspannelement 20 in den Turmschaft 32 hineingeführt wird, und dort das Endstück 260 in einem innen liegenden Widerlager 262 befestigt ist.
Figur 15b zeigt eine Variante der Figur 15 mit einem Verstärkungselement 282 in der Draufsicht.

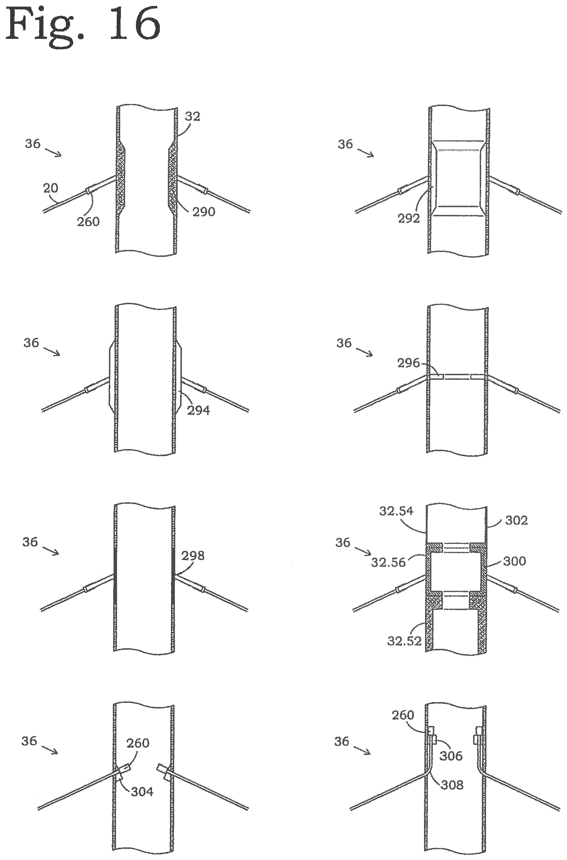

Die Figur 16 zeigt beispielhaft den Abspannpunkt 36 und verschiedene Ausführungsformen, diesen Punkt gemäß den Ausführungsvarianten der Figuren 14 und 15 so zu verstärken, dass die dort eingebrachten und durchzuführenden Kräfte des Übergangselementes 270 sicher, dauerhaft und materialgerecht aufgenommen und geführt werden: Die Schnittbilder zeigen der Reihe nach eine Schaftwandverstärkung 290 nach innen aus dem Material der Schaftwand, eine separate Verstärkung 292 an der Innenseite, eine separate Verstärkung 294 an der Außenseite, eine ringförmige Verstärkung 296 an der Innenseite, eine Variante mit verstärkter Armierung 298 im Schaftquerschnitt (analoges gilt für höhere Betonfestigkeitsklassen) und eine Variante mit einem Übergangsstück 32.56, das ebenfalls eine verstärkte Wandung 300 aufweist. Die letzte Zeile zeigt Varianten mit innenliegenden Widerlagern 304 und 306, bei der das Abspannelement mit dem Endelement 260 entweder direkt in einem Widerlager 304 verankert wird, oder über eine Umlenkung 308 in einem Widerlager 306 befestigt wird.
   Erfindungsgemäß sind Mischungen aller hier dargestellten Bauprinzipien möglich und sinngemäße Konstruktionsweisen ebenfalls.

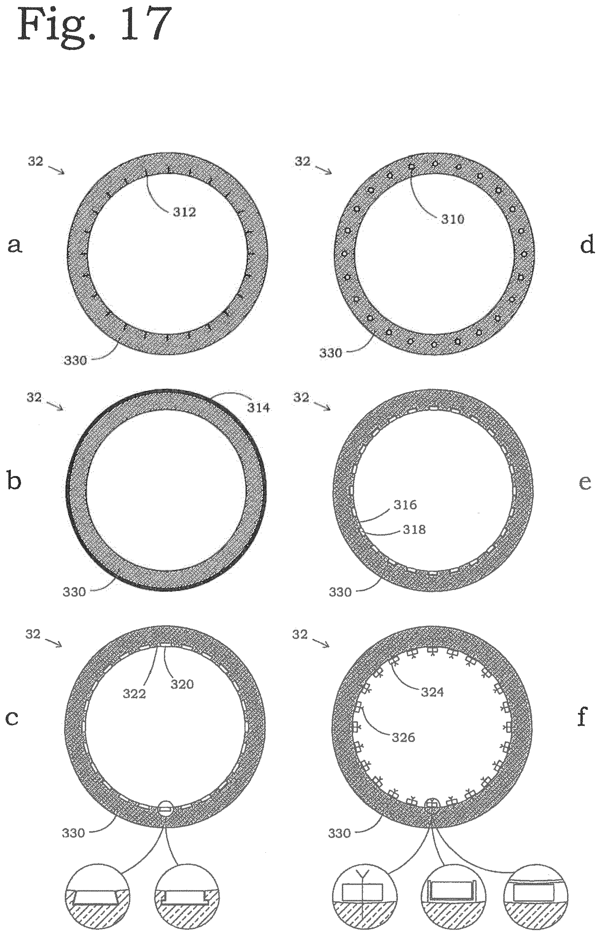

Figur 17 zeigt beispielhaft Ausführungsformen des Spannbetonschaftes 32. Figur 17a zeigt eine Ausführungsform bestehend aus einem Stahlbetonquerschnitt 330 und Kohlefaserlamellen 312, die in dafür vorgesehene Schlitze geklebt sind. Figur 17b zeigt eine Ausführungsform, bei der das Turmrohr außen mit einem Coating 314 oder einer verlorenen Schalung oder einem Sandwichelement umgeben ist, welches Vorspannkräfte aufnehmen kann. Das können u. a. auch textilbewehrte Feinbetonschichten sein. Figur 17c zeigt eine extern verbundlose Ausführungsform, bei der die Zugglieder 320 in die Turmwand eingelassen sind und durch ihre Geometrie daran gehindert werden, aus den Nischen hervorzutreten. Figur 17d zeigt eine Variante, bei der die Zuglemente 310 intern verbundlos geführt werden. Figur 17e zeigt eine Variante, bei der die Zugelemente 318 extern verbundlos durch Führungsgeometrien 316 in Position gehalten werden. Figur 17f zeigt eine Variante, bei der die Zugglieder 324 extern verbundlos an der glatten Turminnenseite mittels Befestigungselementen 326 geführt werden.
   Erfindungsgemäß können alle hier dargestellten Ausführungsformen beliebig miteinander kombiniert und im Sinne der Erfindung abgewandelt werden.

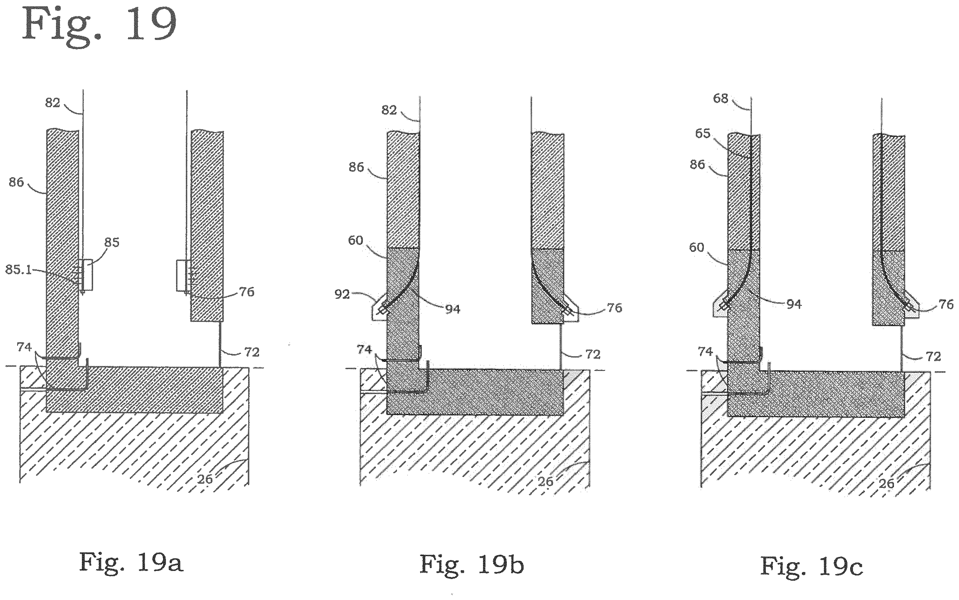

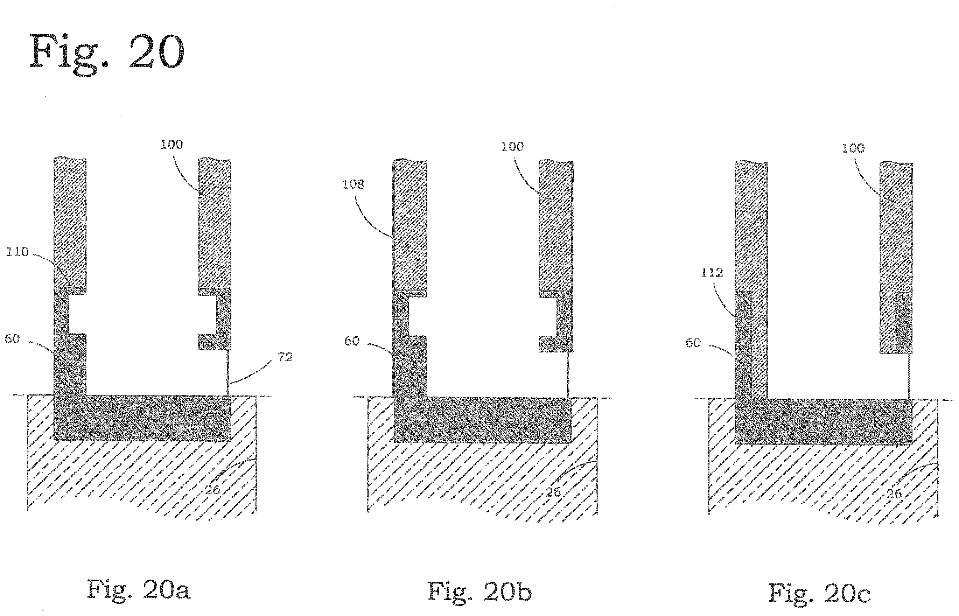

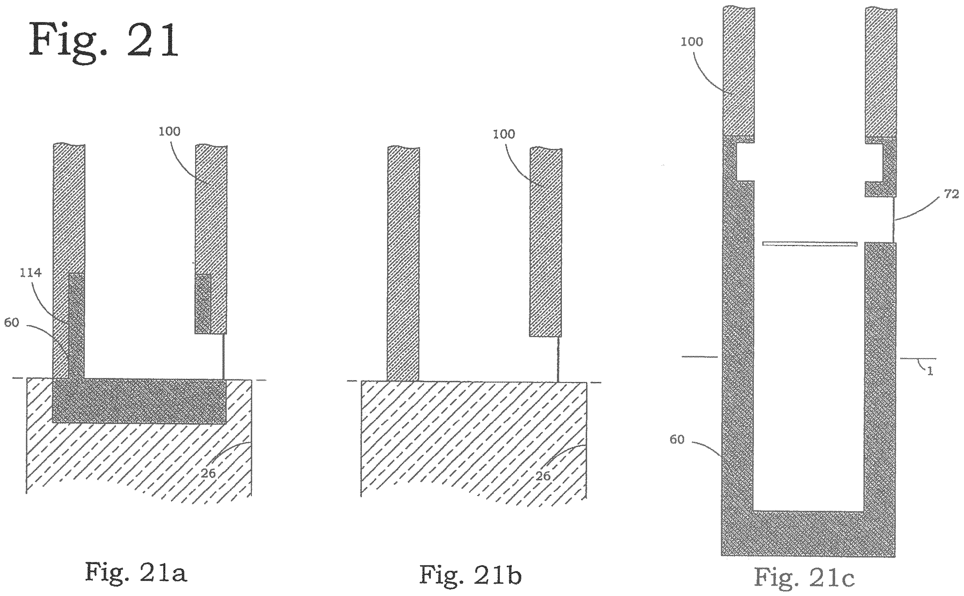

   Die Figuren 18 bis 21 zeigen das erfindungsgemäße Turmfußelement 60 in verschiedenen beispielhaften Ausführungsformen.

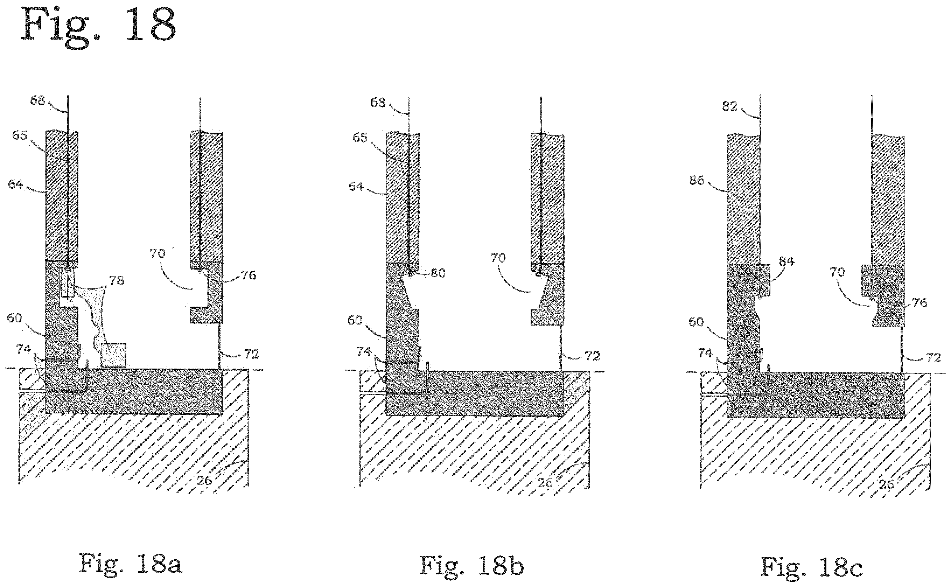

Figur 18a zeigt beispielhaft eine Variante im Schnitt, bei der die intern verbundlosen Zugglieder 68 in einem Spannkanal 65 am unteren Ende des Spannbetonschaftes 64 in einer dafür vorgesehenen Aussparung 70 in dem Fußelement 60 mit einem Spannkopf 76 verankert sind. Der sonst übliche Spannkeller im Fundament 26 entfällt vorteilhafterweise. Die Aussparung in der Turmwandung hält den notwendigen Raum für Montagezwecke, hier insbesondere für die Spannvorrichtung 78 vor. In das Fußelement integriert sind Öffnungen und Zugangselemente, wie Türen 72 oder Leerrohre 74 für Kabeltrassen und dgl. Das Fußelement ist vorzugsweise ein vorgefertigtes Bauteil, das sehr viele notwendige Funktionen und Funktionalitäten am Turmfuß als Bindeglied zwischen Betonschaft 64 und Fundament 26 integriert.
Figur 18b zeigt beispielhaft eine Variante zu Figur 18a, bei der die intern verbundlosen Zuglieder vor der Verankerung eine Umlenkung 80 erfahren.
Figur 18c zeigt beispielhaft eine Variante, bei der die Zugglieder 82 extern verbundlos an der Turminnenwand 86 entlanglaufen und das Widerlager 84 nach innen ragt.
Die Figur 19a zeigt eine beispielhafte Variante, bei der das Zuggliedwiderlager 85 über Halteelemente 85.1 mit dem Turmschaft 86 verbunden ist. In der dargestellten Variante verläuft der Turmschaft bis in das Fundament 26 ohne zusätzliches Turmfußelement.
Die Figur 19b zeigt beispielhaft eine Variante, bei der das extern verbundlose Zugglied 82 durch die Schaftwandung über eine Umlenkung 94 nach außen geführt wird und dort das Widerlager ausgebildet ist, das mit einem Witterungsschutz 92 versehen ist. Vorteilhafterweise bleibt der Innenraum bei dieser Variante frei von Einbauten für die Vorspannung.
Figur 19c zeigt beispielhaft dieselbe Ausführung für intern verbundlose Zugglieder 68 in einem Spannkanal 65.
Figur 20a zeigt beispielhaft einen stumpfen Stoß 110 am Übergang zwischen Turmfußelement 60 und Spannbetonschaft 100.
Figur 20b zeigt beispielhaft eine Ausführungsform, bei der auf der Außenseite eine weitere Bauteilschicht 108, vorzugsweise ein Coating appliziert ist, z. B. eine Textilbetonschicht.
Figur 20c zeigt beispielhaft eine Ausführungsform, bei der der Turmschaft 100 aus dem das Fußelement 60 innen herauswächst, Figur 21a zeigt das gleiche von außen.
Figur 21b zeigt beispielhaft eine Ausführungsvariante, bei der der Turmschaft stumpf, bzw. direkt auf das Fundament aufgesetzt ist.
Figur 21c zeigt beispielhaft eine Variante, bei der die Ebenen der Zugangsöffnung 72, Baugrund 1, Böden, und Hohlräume unterschiedlich zueinander angeordnet sind, sofern das erforderlich ist.
   Erfindungsgemäß sind alle dargestellten Bauformen der Figuren 19 bis 21 beliebig miteinander kombinierbar und mischbar und im Sinne der Erfindung abwandelbar.
Figur 22 zeigt in mehreren Varianten innere Wandabwicklungen 200 und mögliche prinzipielle Positionierung und Anordnungen der Zugglieder 205, entsprechend der Größe des auftretenden Biegemoments 214 im Turmschaft.
Laut Figur 22a können sämtliche Zugglieder erfindungsgemäß von der Spitze des Turmes und der oberen Verankerung 202 vorzugsweise im Übergangsstück 61 unter der Gondel bis zum Fuß des Turmes durchlaufen und dort mit Verankerungen 206 am unteren Ende des Turmes, erfindungsgemäß vorzugsweise an einem Fußelement 208 befestigt sein. Für den Fall, dass über die gesamte Länge eingeklebte oder einbetonierte Zugglieder verwendet werden (insbesondere bei Kohlefaserlamellen) entfallen die Spannköpfe und ihre Widerlager, da die Spannkraft über die gesamte Länge der Klebung in das umgebende Bauteil abgegeben wird.
Entsprechend Figur 22b können eine gewisse Anzahl der Zugglieder auch nicht über die gesamte Schaftlänge reichen, sondern an Zwischenebenen 210 enden. Diese Anordnung ist dem Umstand geschuldet, dass das Maximum der Momentkraft 220 auf der Höhe der Abspannebene 204 auftritt und sowohl zur Turmspitze, als auch zum Turmfuß hin auf Werte nahe Null 218, 216 absinkt.
Gemäß Figur 22c können eine gewisse Anzahl der Zugglieder 212 sich nur oberhalb insbesondere der oberen Abspannebene befinden, da der Schaftquerschnitt unterhalb der obersten (oder einzigen) Abspannebene 204 durch die Abspannung zusätzlich mit Vorspannung beaufschlagt wird.
Figur 22d zeigt eine Variante, bei der die Zugglieder bis unterhalb der Zugangsöffnung 207 am unteren Ende des Turmes reichen. Öffnungen 209, insbesondere zu Wartungszwecken können sich auch in verschiedenen Höhen des Turmes befinden. Erfindungsgemäß können diese Wartungsluken in Bereichen positioniert sein, in denen keine Zugglieder an der Schaftwandung entlanglaufen.

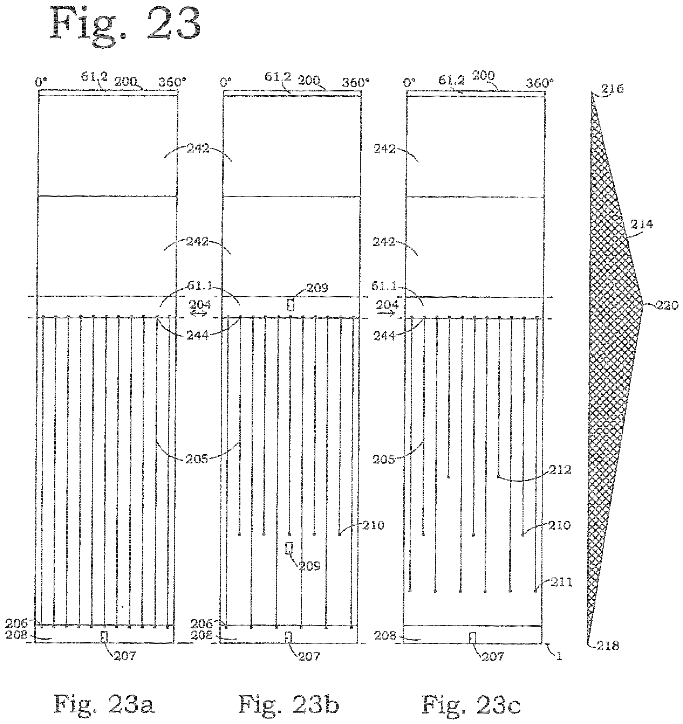

Figur 23 beschreibt in den Varianten 23a bis 23c in gleicher Weise die mögliche Anordnung der Zugglieder 205 für einen Turmschaft 200, der im gezeigten Beispiel nur bis zur Abspannebene 204 in Spannbeton ausgeführt ist, auf das vorzugsweise ein Übergangsstück 61.1 aufgesetzt ist und darauf weitere zugfeste Schaftelemente 242 mit dünnen und leichten Wandungsquerschnitten aufgesetzt sind. Auch in diesem Fall können Zugglieder 205 entsprechend dem abnehmenden Moment 214 im Turmschaft zum unteren Ende hin 218 in unterschiedlichen Höhen 210, 211, 212 vorzeitig enden, um Material und Kosten zu sparen.

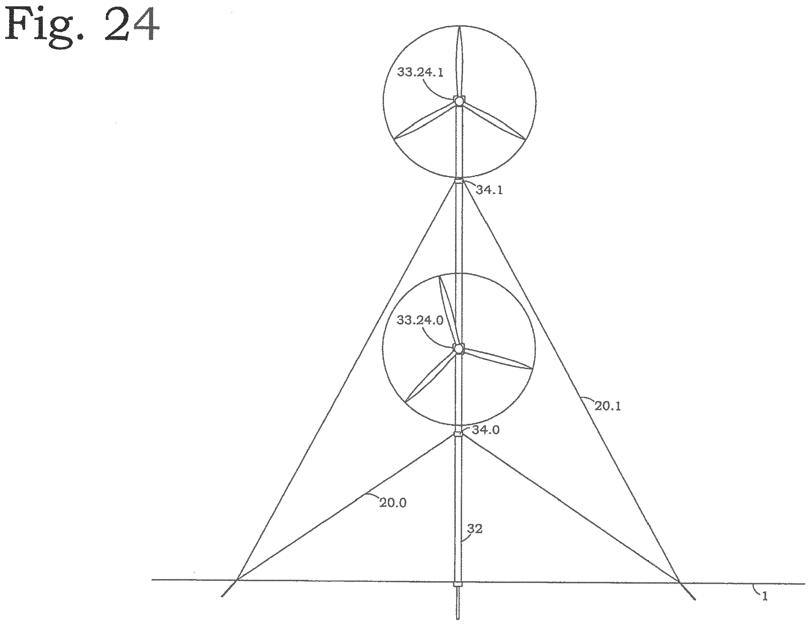

Figur 24 zeigt beispielhaft eine mögliche Anordnung von mehreren Windgeneratoren 33.24.0 und 33.24.1 übereinander an dem erfindungsgemäßen Turmschaft 32 mit einer unteren Abspannung 20.0 an Abspannpunkten unterhalb des unteren Rotors 34.0 und einer dazwischenliegenden Abspannung 20.1 an zwischen den Generatoren liegenden Abspannpunkten 34.1. Diese Anordnung von Abspannelementen, die neben dem Einleiten der Spannkraft in den Turm auch die Momentkraft des Turmschaftes aufnehmen, ermöglicht gestapelte WEA, da das Zusammenspiel von Moment-Armut und Torsionssteifheit im Turmschaftquerschnitt Layouts auch mit einer Doppel- oder Mehrfachbelastung auch für große Windgeneratoren der Multimegawattklasse ab 2MW Leistung zuläßt. Auf diese Weise können an einem einzigen Standort nahezu doppelte Erträge im Vergleich zu herkömmlichen Anlagen erzielt werden. Bei einem zweigeschossigen Parklayout halbiert sich zudem die benötigte Fläche oder verdoppelt sich dessen Ertrag.

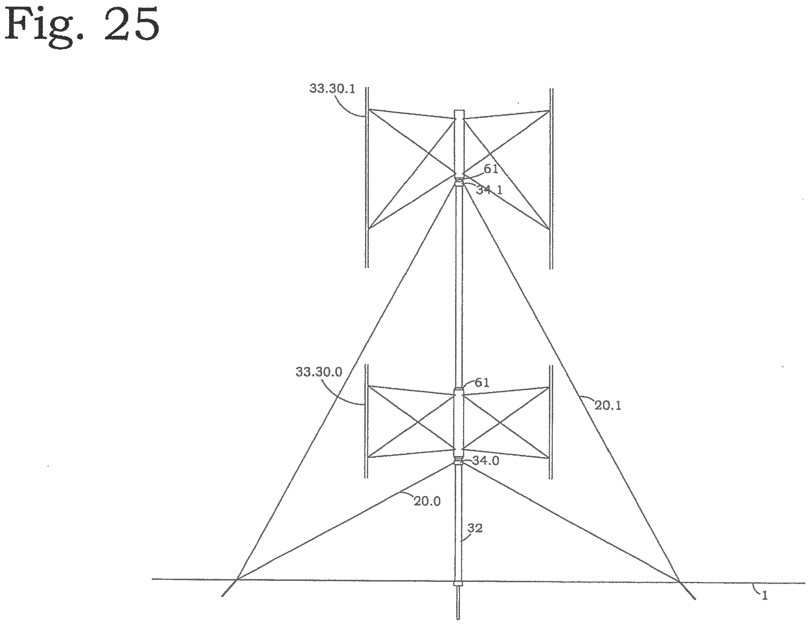

Figur 25 zeigt beispielhaft eine mögliche Anordnung von mehreren vertikalachsigen Windgeneratoren 33.30.0 und 33.30.1 übereinander an dem erfindungsgemäßen Turmschaft 32 mit einer unteren Abspannung 20.0 an Abspannpunkten unterhalb des unteren Rotors 34.0 und einer dazwischenliegenden Abspannung 20.1 an zwischen den Generatoren liegenden Abspannpunkten 34.1. Diese Anordnung von Abspannelementen, die neben dem Einleiten der Spannkraft in den Turm auch die Momentkraft des Turmschaftes aufnehmen, ermöglicht gestapelte WEA auch für die vertikale Ausführungsform von WEA-Generatoren, aus den im vorherigen Abschnitt genannten Gründen.

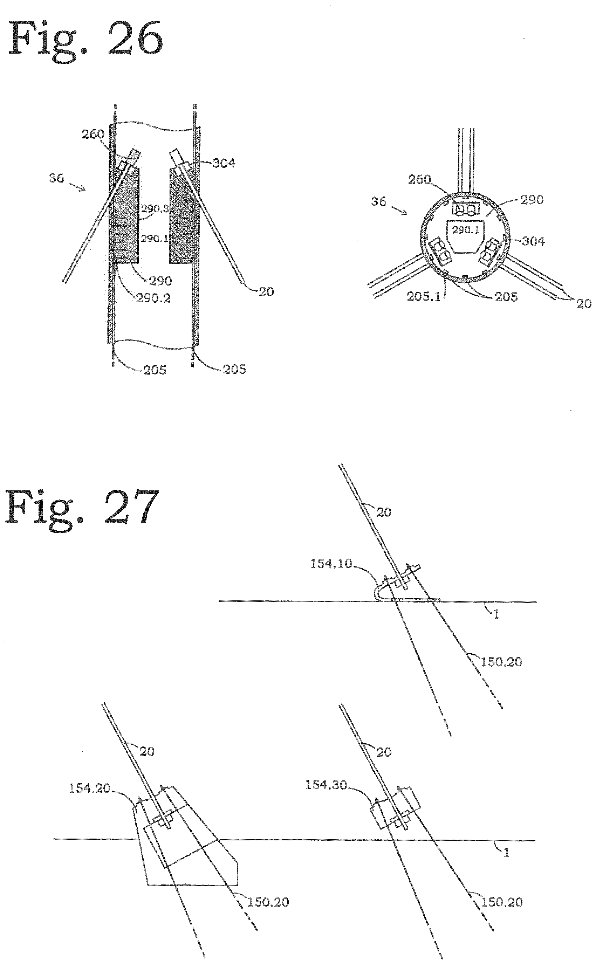

Die Figuren 26 und 27 zeigen bevorzugte Anschlußkonstruktionen für das Abspannelement als Kombination aus den zuvor beschriebenen Merkmalen: Figur 26 zeigt eine nach innen gewendete Schaftaufweitung, bei der an einer zuvor erstellten Turmwandung mittels Rückbiegeverankerungen 290.2 ein Betonelement 290 mit einem Widerlager 304 für ein doppelt und somit redundant geführtes Abspannelement 20 vorzugsweise in einer verlorenen Schalung 290.3 erstellt wird. Hierbei werden vertikale Zuggliedelemente 205 in Aussparungen 205.1 entlanggeführt.

Die Figur 27 zeigt in drei unterschiedlichen Ausführungsformen das Kämpferbauteil 154, welches beispielhaft über Verpressanker 150.20 im Baugrund befestigt ist. In der Variante 154.10 wird die eingeleitete Zugspannung des Abspannelementes 20 über ein pultähnliches Element an die Baugrundverankerung abgegeben. In der Variante 154.20 wird die Zugspannung des Abspannelementes 20 an ein teilweise in das Erdreich eingegrabenes Kämpferbauteil abgegeben, das die eingeleitete Kraft wiederum über eine Baugrundverankerung 150.20 an den umliegenden Baugrund abgibt. Die Variante 154.30 zeigt ein Element, welches frei schwebend das Abspannelement 20 und die Baugrundverankerung 150.20 miteinander verbindet.

Erfindungsgemäß sind alle in den Figuren beispielhaft dargestellten Ausführungsformen frei miteinander kombinierbar und mischbar und im Sinne der Erfindung abwandelbar.

Erfindungsgemäß ist das Turmbauwerk optional mit einer Einrichtung zum variablen Einstellen der Zugspannung der Zugglieder und/oder Abspannelemente versehen.

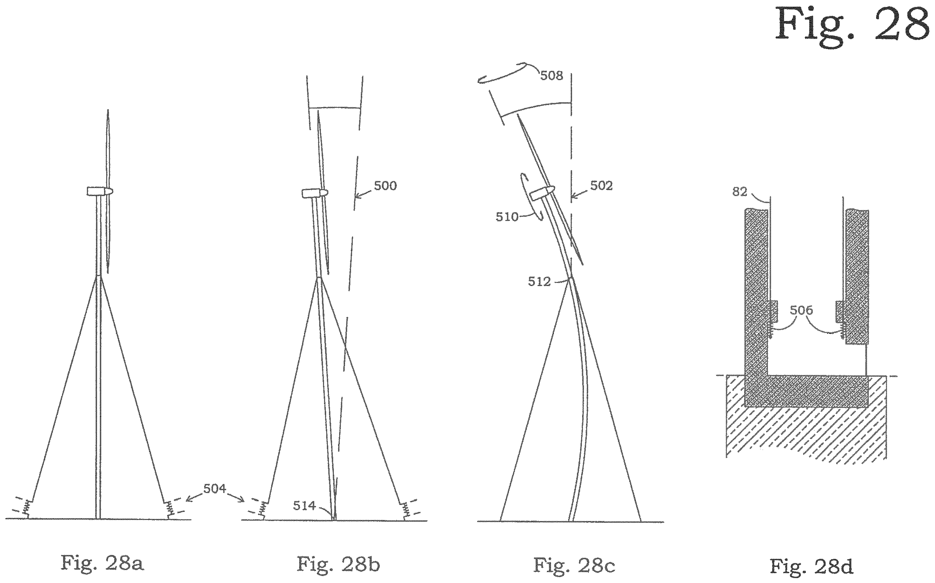

Erfindungsgemäß beeinflußt hierbei ein Stellglied 166, 504, 506 z. B. in der Nähe der Einspannpunkte eine Längenänderung der Zugglieder und/oder Abspannelemente, wodurch sich die Zugspannung in den Zugglieder und/oder Abspannelementen verändern kann und somit auch in dem vor- und abgespannten Bereich des Turmschaftes, was zum einen die Eigenfrequenz des Abspannelementes und des Turmschaftes beeinflußt und zum anderen durch kontrolliertes Nachgeben auch aerodynamische Dämpfung des gesamten Turmbauwerkes in Form einer Pendelbewegung zuläßt (Fig. 28b). Dieses Stellglied 166, 504, 506 ist mit einer logischen Einheit 164 verbunden, die vorzugsweise Werte, wie die Schwingung des Abspannelements, die Zugspannung von Zugglieder und/oder Abspannelementen, die Drehzahl der Rotoreinheit, die Blattschwingung, die Schwingung des Turmschaftes und ggfs. eine erwünschte aerodynamische Dämpfung bei auftreffenden Windböen durch Nachgeben der Abspannung oder der Vorspannung bewirkt und daraus eine notwendige Zugspannung in den Zugglieder und/oder Abspannelementen oder andere Größen errechnet.

Erfindungsgemäß stellt das Stellglied die errechnete, notwendige Zugspannung in den Zugglieder und/oder Abspannelementen so ein, dass Anregungsfrequenzen und Eigenfrequenzen voneinander über eine Veränderung der Zugspannung im Abspannelement und im Turmschaft getrennt bleiben. Die Auslegung der Turmeigenfrequenz in Bezug auf die Anregungsfrequenzen p und 3p gemäß des Campbell-Diagrammes kann so gewählt sein, dass der Turm durch das Verändern der Spannkraft zwischen hart/hart, hart/weich, Resonanz/weich und weich/weich wechseln kann. Zu diesem Zweck wird das Stellglied über eine logische Einheit angesteuert, das über Sensoren die Spannkraft der Spannelemente 162.1, die Rotordrehzahl 162.3, die Turmschwingung 162.2, die Blattschwingung 162.4 und die Schwingung von Spannelementen 162.1 , ggfs. auch den heranströmenden Wind, überwacht und während des Betriebs der Windkraftanlage aktuelle Daten über den Status des Turmbauwerks ermittelt und abhängig von diesen Daten die Zugspannung in zumindest einem Abspannelement und/oder Zuggliedelement aktiv verändert und die Daten zusätzlich für Monitoringzwecke und Langzeitverhalten verwendet werden können.

Erfindungsgemäß kann diese Veränderung der Zugspannung der Abspannelemente auch durch ein seitliches Straffen des Abspannelementes mittels eines weiteren Elementes, vorzugsweise eines zweiten Halteelementes geschehen, das mit einem Stellglied verbunden ist. Die Schwingungen und Oberschwingungen insbesondere der Abspannelemente werden dadurch in ihren möglichen (windinduzierten) Schwingungen effizient gedämpft.

Erfindungsgemäß kann die einstellbare Zugkraft der Vor- und/oder Abspannglieder dazu herangezogen werden, dass die gesamte Konstruktion sich über ein bestimmtes Maß an Auslenkung aus der Ruhestellung weicher verhält, als bei Auslenkungen, die darüber hinaus gehen. Eine aerodynamische Dämpfung ähnlich einem nach oben gerichteten Pendelstab durch Nachgeben ist damit über einen bestimmten Bereich hin möglich, um die Energie des Windes infolge der aerodynamischen Dämpfung durch kurzzeitiges Nachgeben und Zurückschwingen besser zu nutzen (Fig. 28b), als bei einer starren Konstruktion. Bei Auslenkungen, die darüber hinaus gehen, wird die Vorspannkraft und oder die Abspannkraft so eingestellt oder limitiert, dass ein weiteres Verformen nicht möglich ist und beispielsweise eine Betonrohrkonstruktion davor bewahren kann, vom Zustand I in den Zustand II zu wechseln oder die Konstruktion oder Teile davon in anderer Weise über ein gewünschtes Maß hinaus nicht auszulenken oder zu verformen, um beispielsweise ein übermäßiges Nicken der Turbine zu verhindern. (Fig.28c).

Fig. 28d zeigt eine Schnittansicht durch den Turmschaft mit beispielhaften Zuggliedelementen 82, die durch Stellglieder 506 in ihrer Länge variabel einstellbar sind. Entsprechend können die Zuggliedelemente 82 auch am oberen Ende des Turmschafts gelagert sein.

Erfindungsgemäß ist insbesondere das Nachgeben der Abspannung durch Stellglieder als vorteilhaft zu nennen, das dem vertikalen Stab die Eigenschaften eines nachgebenden Pendels über die gesamte Länge 500 verleiht und somit ein Nicken der Gondel insbesondere durch die zweite Eigenform des Turmes vermeidet und auf diese Weise Corioliskräfte 508, hervorgerufen durch die Drehung der rotierenden Masse des Rotors 510 über eine kurze Distanz 502 bis zum Abspannpunkt 512 vermindert, wie im Vergleich der Figuren 28b und 28c schematisch beschrieben wird. Gleiches gilt analog für vertikalachsige Rotoren.

Erfindungsgemäß können die Stellglieder an den Zugglieder und/oder Abspannelementen zur Einstellung der Zugspannung vorzugsweise aktiver Natur sein.

Erfindungsgemäß weist das Turmbauwerk an seinem unteren Einspannpunkt eine dauerelastische Verbindung zwischen Turm und Fundament auf, die Zwängungen durch Imperfektionen, Schiefstellungen, unterschiedliche Setzung des Bodens und dadurch hervorgerufenes Kippen des Fundamentes oder durch Deformation unter Belastung in den Eigenformen des Turmschaftes vermeidet und somit Rissbildung am Übergang von Turm zum Fundament vorbeugt. Diese Verbindung ist nicht um die Längsachse des Turmes drehbar.

Zudem ergeben sich für die Klasse der Multimegawatt-Anlagen gegen das Vorurteil der Fachwelt weitere Vorteile, die ein abgespannter Mast zusätzlich mit sich bringt: Hier sind insbesondere Materialersparnis und Materialeffizienz durch große Schlankheit zu nennen. Die seitliche Auslenkung des Windgenerators ist wesentlich geringer, und es lassen sich durch die Torsionssteifheit die gewünschten deutlich höheren Nabenhöhen bei vertretbarem konstruktivem Aufwand erzielen. Durch die optionalen Stellglieder in den Vor- und Abspannelementen lassen sich zudem mögliche Resonanzen aktiv umgehen und die seitlichen Auslenkungen so einstellen, dass aerodynamische Dämpfung trotz der großen Steifigkeit der Konstruktion möglich bleibt. Der Flächenverbrauch der gesamten Anlage ist durch den schlanken Turmfuß geringer und das Landschaftsbild wird durch die extreme Schlankheit weniger stark beeinträchtigt, als durch herkömmliche Bauweisen.

## Patentansprüche

1. Turmbauwerk für eine Windenergieanlage mit einem Turmschaft (32), einem Fundament (26, 28) und einem Übergangsstück (61) im Bereich des oberen Endes des Turmschaftes (32), wobei radial einwärts der Außenhaut Zugglieder (68) vorgesehen sind, durch die der Turmschaft (32) zumindest abschnittsweise vertikal vorgespannt ist und wobei der Turmschaft (32) im Bereich zwischen dem Übergangsstück (61) und dem Fundament (26, 28) aus Beton, insbesondere Spannbeton, hergestellt ist, **dadurch gekennzeichnet, dass** am fertigen Turmbauwerk zu einer Längsachse (A) des Turmschaftes (32) geneigte, radial außerhalb der durch den Turmschaft (32) definierten Außenhaut verlaufende Abspannelemente (30) vorgesehen sind, durch die der Turmschaft (32) zumindest abschnittsweise abgespannt ist, und dass unterschiedliche Betonsorten, unterschiedliche Schaftquerschnitte und unterschiedliche Bewehrungsgrade verwendet werden, um Oberschwingungen des Turmbauwerkes zu vermeiden.

2. Turmbauwerk nach Anspruch 1, **dadurch gekennzeichnet, dass** der Turmschaft (32) ein einen Hohlraum (197) umschließenden Querschnitt hat.

3. Turmbauwerk nach Anspruch 1 oder 2 oder nach dem Oberbegriff des Anspruchs 1, **dadurch gekennzeichnet, dass** zumindest ein Abspannelement (20) mit einer Einrichtung zum variablen Einstellen der Zugspannung des Abspannelements (20) gekoppelt ist, insbesondere, dass Spannglieder vorgesehen sind, zum Erzeugen der variablen Spannkraft im Abspannelement (30).

4. Turmbauwerk nach Anspruch 3, **dadurch gekennzeichnet, dass** Sensoren vorhanden sind, über die während des Betriebs der Windkraftanlage aktuelle Daten über den Status des Turmbauwerks ermittelt werden und abhängig von diesen Daten die Zugspannung in zumindest einem Abspannelement (30) aktiv verändert wird und/oder **dadurch gekennzeichnet, dass** ein Stellglied (166) an einem unteren Einspannpunkt (24, 38) und/oder an einem oberen Einspannpunkt (36) des Abspannelements (30) eine Längenänderung des Abspannelements (30) bewirkt, um die Zugspannung im Abspannelement (30) und somit auch die Spannung in dem abgespannten Bereich des Turmschaftes (32) zu verändern.

5. Turmbauwerk nach einem der Ansprüche 3 bis 4, **dadurch gekennzeichnet, dass** Sensoren (164, 164.1, 164.2) vorhanden sind, zum Bestimmen von Werten, wie die Schwingung des oder der Abspannelemente (30), die Zugspannung des Abspannelementes (30), die Drehzahl der Rotoreinheit, die Blattschwingung, die Windgeschwindigkeit des anströmenden Windes vor dem Turmbauwerk und/oder die Schwingung des Turmschaftes (32), wobei die Werte verarbeitet und daraus eine notwendige Zugspannung bestimmt werden.

6. Turmbauwerk nach einem der Ansprüche 3 bis 5, **dadurch gekennzeichnet, dass** ein Verankerungselement (156) vorhanden ist und das Stellglied (166) eine errechnete, notwendige Zugspannung über das Verankerungselement (156) im Abspannelement (30) einstellt.

7. Turmbauwerk nach einem der oberen Ansprüche, **dadurch gekennzeichnet, dass** die Spannkraft in den Zuggliedern (68) des Turmschaftes (32) variabel verstellbar ausgebildet ist.

8. Turmbauwerk nach einem der oberen Ansprüche, **dadurch gekennzeichnet, dass** die Abspannelemente (30) über Schwingungsdämpfungselemente (158) wie Reibdämpfer, Schwingungsstörseile, Öldämpfer und magnetorheologische Dämpfer in ihren möglichen Schwingungen, insbesondere auch windinduzierten Schwingungen und Oberschwingungen gedämpft werden und Schwingungen des Turmschaftes (32) ebenfalls über Fortpflanzungen durch die Abspannelemente (30) an durch diese Schwingungsdämpfungselemente (158) gedämpft werden.

9. Turmbauwerk nach einem der oberen Ansprüche für Windkraftanlagen von mehr als 2 Megawatt installierter Leistung, vorzugsweise mehr als 140 Metern Nabenhöhe, insbesondere ab 170 Metern Nabenhöhe und/oder mit Schlankheitsgraden der Schaftkonstruktion größer 30 und für mehrblättrige Rotoren insbesondere für Blattlängen von mehr als 50 Metern.

10. Turmbauwerk nach einem der oberen Ansprüche, **dadurch gekennzeichnet, dass** das Turmbauwerk ein vorgefertigtes Element am Fuß des Turmes aufweist, das Öffnungen, Schächte und/oder Zuggliedwiderlager (85) enthält.

11. Turmbauwerk nach Anspruch 10, **dadurch gekennzeichnet, dass** die Zuggliedwiderlager (85) der Schaftkonstruktion außen am Turmschaft (32) oder im Fundament (26, 28) ausgebildet werden können.

12. Turmbauwerk nach einem der oberen Ansprüche, **dadurch gekennzeichnet, dass** der Turmschaft (32) einen konstanten Außenquerschnitt, insbesondere zur Abspannebene aufweist, zur Bildung einer zylindrischen Außenhaut, vorzugsweise wobei der Innendurchmesser des Turmschafts (32) einen nicht konstanten Innenquerschnitt besitzt.

13. Turmbauwerk nach einem der oberen Ansprüche, **dadurch gekennzeichnet, dass** das Turmbauwerk mehrere Abspannebenen aufweist, deren Abspannelemente (30) am Boden vorzugsweise in gemeinsamen Fundamenten (26, 28) zusammenlaufen.

14. Turmbauwerk nach einem der oberen Ansprüche, **dadurch gekennzeichnet, dass** die obere oder einzige Abspannebene die Höhe zwischen Turmspitze und Fußpunkt (24) der gesamten Turmkonstruktion im Verhältnis eins zu zwei oder in einem Verhältnis darunter teilt und/oder **dadurch gekennzeichnet, dass** eine untere Abspannebene die Höhe zwischen Turmspitze und Fußpunkt (24) der gesamten Turmkonstruktion vorzugsweise im Verhältnis zwei zu eins oder in einem Verhältnis darüber teilt.

15. Verfahren zum Stabilisieren eines Turmbauwerks nach einem der vorhergehenden Ansprüche, **dadurch gekennzeichnet, dass** während des Betriebs der Windkraftanlage aktuelle Daten über den Status des Turmbauwerks ermittelt werden und abhängig von diesen Daten die Zugspannung in zumindest einem Abspannelement (30) aktiv verändert wird.

## Claims

1. Tower construction for a wind energy plant, having a tower shaft (32), a foundation (26, 28) and a transition-piece (61) in the region of the upper end of the tower shaft (32), with tension members (68) being provided radially inwards of the outer skin, by means of which the tower shaft (32) is vertically prestressed at least in sections, and the tower shaft (32) is made of concrete, in particular prestressed concrete, in the region between the transition piece (61) and the foundation (26, 28), **characterised in that** at the finished tower construction tensioning elements (30) are provided, which are inclined relative to a longitudinal axis (A) of the tower shaft (32) and extend radially outside the outer skin defined by the tower shaft (32), by which the tower shaft (32) is tensioned at least in sections, and **in that** different types of concrete, different shaft cross-sections and different degrees of reinforcement are used in order to avoid harmonics of the tower construction.

2. Tower construction according to claim 1, **characterised in that** the tower shaft (32) has a cross-section enclosing a cavity (197).

3. Tower construction according to claim 1 or 2 or according to the generic term of claim 1, **characterised in that** at least one guying element (20) is coupled to a device for variably adjusting the tensile stress of the guying element (20), in particular that tendons are provided for generating the variable tension force in the guying element (30).

4. Tower construction according to claim 3, **characterised in that** sensors are provided, by means of which current data about the status of the tower construction are determined during the operation of the wind power plant and, depending on these data, the tensile stress in at least one guying element (30) is actively changed and/or **characterised, in that** an actuator (166) at a lower clamping point (24, 38) and/or at an upper clamping point (36) of the guying element (30) causes a change in length of the guying element (30) in order to change the tensile stress in the guying element (30) and thus also the stress in the guyed region of the tower shaft (32).

5. Tower construction according to one of the claims 3 to 4, **characterised in that** sensors (164, 164.1, 164.2) are present for measuring values such as the vibration of the guying element (30), the tensile stress of the guying element (30), the rotational speed of the rotor unit, the blade vibration, the wind speed of the approaching wind in front of the tower construction and/or the vibration of the tower shaft (32), whereby these values are processed and a necessary tensile stress is determined therefrom.

6. Tower construction according to one of the claims 3 to 5, **characterised in that** an anchoring element (156) is present and the actuator (166) sets a calculated necessary tensile stress via the anchoring element (156) in the guying element (30).

7. Tower construction according to one of the above claims, **characterised in that** the tension force in the tension members (68) of the tower shaft (32) is designed to be variably adjustable.

8. Tower construction according to one of the upper claims, **characterised in that** the guying elements (30) are damped in their possible vibrations, in particular also wind-induced vibrations and harmonics, via vibration damping elements (158) such as friction dampers, vibration interference cables, oil dampers and magnetorheological dampers, and vibrations of the tower shaft (32) are likewise damped by these vibration damping elements (158) via propagations through the guying elements (30).

9. Tower construction according to one of the above claims for wind turbines of more than 2 megawatts installed power, preferably more than 140 metres hub height, in particular from 170 metres hub height and/or with slenderness levels of the shaft construction greater than 30 and for multi-bladed rotors, in particular for blade lengths of more than 50 metres.

10. Tower construction according to one of the above claims, **characterised in that** the tower construction has a prefabricated element at the base of the tower which contains openings, shafts and/or tension member abutments (85).

11. Tower construction according to claim 10, **characterised in that** the tension member abutments (85) of the shaft construction can be formed on the outside of the tower shaft (32) or in the foundation (26, 28).

12. Tower construction according to one of the above claims, **characterised in that** the tower shaft (32) has a constant outer cross-section, in particular with respect to the area of the guying level, to form a cylindrical outer skin, preferably wherein the inner diameter of the tower shaft (32) has a non-constant inner cross-section.

13. Tower construction according to one of the above claims, **characterised in that** the tower construction has several guying levels, with the guying elements (30) converging at the bottom preferably in common foundations (26, 28).

14. Tower construction according to one of the upper claims, **characterised in that** the upper or only guying level divides the height between tower top and the tower base (24) of the entire tower construction in a ratio of one to two or in a ratio below and/or **characterised in that** a lower guying level divides the height between tower top and base (24) of the entire tower construction preferably in a ratio of two to one or in a ratio above.

15. Method for stabilizing a tower construction according to one of the preceding claims, **characterised in that** during the operation of the wind turbine current data about the status of the tower construction are determined and depending on these data the tensile stress in at least one guying element (30) is actively changed.

## Revendications

1. Construction de tour pour une centrale éolienne, comprenant une tige de tour (32), une fondation (26, 28) et une pièce de transition (61) dans la région de l'extrémité supérieure de la tige de tour (32), des éléments de traction (68) étant prévus radialement vers l'intérieur du revêtement extérieur, au moyen desquels la tige de tour (32) est précontraint verticalement au moins par sections, et la tige de tour (32) étant en béton, en particulier en béton précontraint, dans la région entre la pièce de transition (61) et la fondation (26, 28), **caractérisé en ce que** des dispositifs de tension (30) sont prévus sur la construction de tour finie, qui sont inclinés par rapport à un axe longitudinal (A) de la tige de la tour (32) et s'étendent radialement à l'extérieur du revêtement extérieur défini par la tige de la tour (32), par lesquels la tige de la tour (32) est tendu au moins par sections, et **en ce que** différents types de béton, différentes sections de la tige et différents degrés de renforcement sont utilisés afin d'éviter les harmoniques de la structure de la tour.

2. Construction de tour selon la revendication 1, **caractérisée en ce que** la tige de la tour (32) a une section transversale enfermant une cavité (197).

3. Construction de tour selon la revendication 1 ou 2 ou selon le terme générique de la revendication 1, **caractérisée en ce qu'**au moins un dispositif de tension (20) est couplé à un dispositif pour le réglage variable de la valeur de traction du dispositif de tension (20), en particulier **en ce que** des tendons sont prévus pour générer la force de traction variable dans le dispositif de tension (30).

4. Construction de tour selon la revendication 3, **caractérisée en ce que** des capteurs sont prévus, au moyen desquels des données actuelles sur l'état de la structure de la tour sont déterminées pendant l'exploitation de la centrale éolienne et, en fonction de ces données, la valeur de traction dans au moins un dispositif de tension (30) est activement modifiée et/ou **caractérisée, en ce qu'**un actionneur (166) sur un point de serrage inférieur (24, 38) et/ou sur un point de serrage supérieur (36) de le dispositif de tension (30) provoque une modification de la longueur de le dispositif de tension (30) afin de modifier la valeur de traction dans le dispositif de tension (30) et donc modifier également la valeur de tension dans la zone haubanée la tige de la tour (32).

5. Construction de tour selon l'une des revendications 3 à 4, **caractérisée en ce que** des capteurs (164, 164.1, 164.2) sont présents pour déterminer des valeurs telles que la vibration du ou des dispositifs de tension (30), la valeur de traction de le dispositif de tension (30), la vitesse de rotation de l'unité de rotor, la vibration des pales, la vitesse du vent entrant devant la construction de la tour et/ou la vibration la tige de la tour (32), les valeurs étant traitées et une valeur de traction nécessaire étant déterminée à partir de celles-ci.

6. Construction de tour selon l'une des revendications 3 à 5, **caractérisée en ce qu'**un élément d'ancrage (156) est présent et l'actionneur (166) fixe une valeur de traction nécessaire calculée via l'élément d'ancrage (156) dans le dispositif de tension (30).

7. Construction de tour selon l'une des revendications précédentes, **caractérisée en ce que** la force de tension dans les éléments de tension (68) de la tige de la tour (32) est conçue pour être réglable de manière variable.

8. Construction de tour selon l'une des revendications précédentes, **caractérisée en ce que** les dispositifs de tension (30) sont amortis dans leurs vibrations éventuelles, en particulier également les vibrations et harmoniques induites par le vent, par l'intermédiaire d'éléments d'amortissement des vibrations (158) tels que des amortisseurs à friction, des câbles d'interférence de vibration, des amortisseurs à huile et des amortisseurs magnétorhéologiques, et les vibrations de la tige de tour (32) sont également amorties par ces éléments d'amortissement des vibrations (158) par l'intermédiaire de propagations à travers les dispositifs de tension (30).

9. Construction de tour selon l'une des revendications précédentes pour les éoliennes d'une puissance installée supérieure à 2 mégawatts, de préférence à une hauteur supérieure à 140 mètres, en particulier à partir d'une hauteur de 170 mètres et/ou avec des niveaux d'élancement de la construction de la tige de la tour supérieurs à 30 et pour les rotors multi-pales en particulier pour des longueurs de pales supérieures à 50 mètres.

10. Construction de tour selon l'une des revendications précédentes, **caractérisée en ce que** la construction de la tour comporte un élément préfabriqué à la base de la tour qui contient des ouvertures, des puits et/ou des butées d'éléments de tension (85).

11. Construction de tour selon la revendication 10, **caractérisée en ce que** les butées des éléments de tension (85) de la construction de la tige peuvent être formées sur l'extérieur de la tige de la tour (32) ou dans la fondation (26, 28).

12. Construction de tour selon l'une des revendications précédentes, **caractérisée en ce que** la tige de la tour (32) a une section extérieure constante, en particulier par rapport au plan de contreventement, pour former une peau extérieure cylindrique, de préférence dans laquelle le diamètre intérieur de la tige de la tour (32) a une section intérieure non constante.

13. Construction de tour selon l'une des revendications précédentes, **caractérisée en ce que** la structure de tour comporte plusieurs plans de tension, dont les dispositifs de tension (30) convergent vers le bas, de préférence dans des fondations communes (26, 28).

14. Construction de tour selon l'une des revendications précédentes, **caractérisée en ce que** le plan de tension supérieur ou unique divise la hauteur entre le sommet de la tour et la base (24) de la construction de tour entière dans un rapport de un à deux ou dans un rapport inférieur et/ou **caractérisée en ce qu'**un plan de tension inférieur divise la hauteur entre le sommet de la tour et la base (24) de la construction de tour entière de préférence dans un rapport de deux à un ou dans un rapport supérieur.

15. Méthode pour stabiliser une construction de tour selon l'une des revendications précédentes, **caractérisée en ce que** pendant le fonctionnement de l'éolienne, des données actuelles sur l'état de la structure de la tour sont déterminées et en fonction de ces données, la valeur de traction dans au moins un dispositif de tension (30) est activement modifiée.
